# EUROPÄISCHE PATENTSCHRIFT

(11) **EP 1 346 814 B1**
(45) Veröffentlichungstag und Bekanntmachung des Hinweises auf die Patenterteilung: **20.09.2006**
(21) Anmeldenummer: 03004635.3
(22) Anmeldetag: 03.03.2003
(51) Int. Cl.: B29C 47/90

(54) **Kalibrierblende**
Calibrating device
Dispositif de calibration

(30) Priorität: 19.03.2002 AT 4242002
(43) Veröffentlichungstag der Anmeldung: 24.09.2003
(73) Patentinhaber: Greiner Extrusionstechnik GmbH, 4550 Kremsmünster (AT)
(72) Erfinder: Kössl, Reinhold, 4552 Wartberg/Krems (AT)
(74) Vertreter: Secklehner, Günter

(56) Entgegenhaltungen:
- EP-A- 1 023 983
- WO-A-01/43939
- DE-U- 29 906 109
- US-A- 5 120 212

## Beschreibung

Die Erfindung bezieht sich auf eine Kalibrierblende, für eine Extrusionsanlage, mit zumindest einer darin angeordneten Kalibrieröffnung, welche mehrere Formflächen zum Anlegen eines hindurchführbaren Gegenstandes aufweist, wie dies im Anspruch 1 und 2 beschrieben wird.

Aus der EP 1 023 983 B 1 ist eine Extrusionsdüse zur Herstellung der Profilgeometrie bekannt geworden, wobei in der Extrusionsdüse ein Profilspalt ausgebildet ist, der dem zu extrudierenden Profil entspricht und der durch eine äußere Begrenzungsfläche und mindestens einen Dorn definiert ist. Dadurch wird ein Strömungsquerschnitt für den durch die Extrusionsdüse hindurch tretenden Schmelzestrang geschaffen. Zur Veränderung des Strömungsquerschnittes ist ein Mittel zur betriebsmäßigen Veränderung der Dicke des Profilspaltes in mindestens einem vorbestimmten Bereich zwischen dem Dom und der äußeren Begrenzungsfläche vorgesehen. Zusätzlich dazu können noch weitere Mittel zur Kühlung ausgewählte Bereiche des extrudierten Profils am Düsenaustritt vorgesehen sein. Wird beispielsweise bei einer Abstimmfahrt erkannt, dass Mängel an dem Profil möglicherweise darauf zurückzuführen sind, dass die Strömungsgeschwindigkeit des Materials in einem bestimmten Profilabschnitt zu groß ist, dann kann durch eine Verkleinerung des entsprechenden Abschnitts des Profilspaltes im Extrusionswerkzeug gezielt ein Eingriff vorgenommen werden. Durch die Veränderung der Größe des Profilspaltes kann die mengenmäßige Verteilung der Kunststoffschmelze über den Querschnitt des herzustellenden Profils beeinflusst werden.

Aus der US 3,887,322 A ist eine Extrusionsdüse für die gleichzeitige Herstellung von mehreren aus der Düse gleichzeitig austretenden Extrusionssträngen bekannt geworden, bei welcher das Extrudat in einer einfachen und horizontal angeordneten Reihe, jedoch jeweils voneinander distanziert, aus den in der Extrusionsdüse ausgebildeten Öffnungen austritt. Zur Festlegung der Größe und damit des Querschnitts der einzelnen Stränge sind im Anschluß an den Verteilkanal der Extrusionsdüse in dessen Austrittsbereich mehrere nebeneinander angeordneten Aufteilelemente für die Kunststoffschmelze angeordnet, wobei im Bereich der Düsenlippe stets der vorbestimmte Querschnitt für jeden einzelnen herzustellenden Kunststoffstrang festgelegt werden kann. Zur Feinabstimmung weist jedes dieser Aufteilelemente einen dieses durchsetzenden Trennspalt auf, durch welchen mittels Verformung des Aufteilelementes der Austrittsquerschnitt für den jeweiligen Kunststoffstrang vergrößert oder verkleinert werden kann. Durch diese Verstellung ist es möglich, die einzelnen gleichzeitig hergestellten Kunststoffstränge zueinander in einem stets gleich großen Querschnitt herstellen zu können.

Eine aus mehreren Teilen zusammengesetzte Kalibrierblende ist aus der EP 0 990 805 A1 der gleichen Anmelderin bekannt geworden, bei welcher die Kalibrierblende aus einzelnen diese bildenden Teile in Abhängigkeit von der Profilkontur zusammengesetzt ausgebildet ist und diese einzelnen Teile an den einander zugewandten Trennflächen aneinander anliegen. Zur gegenseitigen Ausrichtung der einzelnen Teile ist zwischen diesen zumindest ein Passelement angeordnet, mit welchem ein Einstellen bzw. Nachjustieren der einzelnen Teile relativ zueinander durch Veränderung des Abstandes der Passflächen am Passelement durchgeführt werden kann. Je nach Anordnung der Teilungsebenen ist hierzu meist eine quer zur Extrusionsrichtung des hindurchführbaren Gegenstandes ausgerichtete Verstellbewegung möglich. Nachteilig dabei ist, dass ein relativ hoher Bearbeitungsaufwand für die Anbringung der Passelement zwischen einer einzelnen zueinander verstellbaren Teilen der Kalibrierblende notwendig ist und auch noch zusätzliche Teile für den Verstellvorgang angefertigt werden müssen, wodurch sich ein höherer Kostenaufwand ergibt. Gleichfalls konnte nicht in allen Anwendungsfällen ein ausreichendes Verstellergebnis erzielt werden.

Aus der DE 198 06 202 C1 bzw. der EP 0 936 053 A1 sind Kurzkaliber für eine Kühl- und Kalibriereinrichtung bekannt geworden, die eine Kalibrierplatte sowie zumindest eine darin angeordnete Profilquerschnittsausnehmung und wenigstens einen Kalibrierungskörper, der in die Profilquerschnittsausnehmung teilweise hineinragt, umfasst. Dabei wird der zu kalibrierende Gegenstand, insbesondere das Kunststoffhohlprofil, durch die Querschnittsausnehmung hindurchgezogen. In die Kalibrierplatte ist von der Profilquerschnittsausnehmung wenigstens eine Verriegelungsausnehmung eingebracht, in welche der Kalibrierungskörper mit seinem Verriegelungskörper eingesetzt werden kann. Der Verriegelungskörper seinerseits umfasst den Verriegelungsfußkörper sowie einen damit verbundenen Kalibrierkörper, wobei im Verriegelungsfußkörper eine Bolzenaufnahmeausnehmung eingebracht ist. Weiters ist im Verriegelungskörper noch eine Schlitzausnehmung vorgesehen. Zur Halterung des Verriegelungskörpers ist dieser in die Verriegelungsausnehmung der Kalibrierplatte einzusetzen und mittels eines konischen Verriegelungsbolzenelementes durch Einbringen in die Bolzenaufnahmeausnehmung an der Kalibrierplatte festzulegen. Nachteilig dabei ist, dass die einzelnen Teile mit hohen Fertigungsgenauigkeiten herzustellen sind, um eine einwandfreie Lagefixierung an der Kalibrierplatte zu erzielen, wobei ein eigenständiges Lösen der Verbindung nicht in allen Anwendungsfällen gesichert verhindert werden konnte.

Eine weitere Kalibrierplatte für den Tank eines Extrusionswerkzeuges ist aus der AT 003 321 U1 sowie der DE 299 06 109 U1 bekannt geworden, in welcher zumindest ein Durchgangsloch, welches in seiner Form im wesentlichen dem Profil des Profilstrangs entspricht, eingebracht ist, um den Profilstrang beim Durchlaufen des Strangs zu führen und in Form zu halten. Dabei sind am Umfang des Durchgangsloches in der Kalibrierplatte an Stellen, an denen der Profilstrang entlanggleitet, verschleißfeste Einsätze vorgesehen, welche mittels eines Presssitzes, durch Klebe- oder Lötverbindungen oder durch Schraubverbindungen in der Kalibrierplatte gehalten sind. Nachteilig dabei ist, dass die einzelnen Einsätze nur mit hohem Arbeitsaufwand an der Kaliberplatte befestigbar und bei entsprechender Abnützung wiederum mit hohem Arbeitsaufwand gegen neue Einsatzteile austauschbar sind.

Eine aus mehreren Einzelteilen zusammengesetzte Kalibrierplatte ist aus der US 5,626,807 A bekannt geworden, bei welcher einzelne Teile der Kalibrierplatte, insbesondere jene zur Ausbildung nutförmiger Abschnitte des Kunststoffprofils, zwischen den einzelnen Plattensegmenten gehalten und festgelegt werden.

Der vorliegenden Erfindung liegt die Aufgabe zugrunde, eine Kalibrierblende, für eine Extrusionsanlage zu schaffen, bei welcher die Endabstimmung für die Ausformung der vorgegebene Profilkontur des Gegenstandes rasch und vor allem kostengünstig ohne hohen zusätzlichen Bearbeitungsaufwand an der Kalibrieröffnung durchgeführt werden kann.

Diese Aufgabe der Erfindung wird durch die Merkmale des Anspruches 1 gelöst. Der sich durch die Merkmale des Kennzeichenteiles des Anspruches 1 ergebende überraschende Vorteil liegt darin, dass stets gemeinsam mehrere Formflächen bzw. Teile von diesen zusammenhängend verlagert werden, um so eine Korrektur der Kalibrieröffnung zur zumindest bereichsweisen Formgebung bzw. Ausformung des hindurchführbaren Gegenstandes durchführen zu können. Dabei können sowohl rasch Korrekturen in bezug auf die Winkeligkeit bei ansonst nahezu unveränderter Maßhaltigkeit des Gegenstandes als auch Korrekturen in bezug auf Abstandsmaße durchgeführt werden. Durch diese gemeinsame Verlagerung kann aber auch der ansonst nachträglich hohe Aufwand an Abstimmungsarbeiten an den einzelnen Kalibrierblenden bzw. Stützplatten stark reduziert werden, wodurch auch diese Tätigkeiten in wesentlich kürzerer Zeit als bisher üblich abgeschlossen sind. Weiters ist noch von besonderem Vorteil, dass bei einer Änderung der Zusammensetzung der Ausgangsprodukte zur Bildung des Gegenstandes die Abstimmung zur Endausformung des Gegenstandes an den Kalibrierblenden bzw. Stützplatten wiederum ohne hohen Bearbeitungsaufwand durchgeführt werden kann, wodurch sehr kurze Umrüstzeiten und damit verbunden kurze Ausfallzeiten für die Produktion erzielbar sind.

Die Aufgabe der Erfindung wird aber auch durch die Merkmale des Anspruches 2 gelöst. Der sich durch die Merkmale des Kennzeichenteiles des Anspruches 2 ergebende überraschende Vorteil liegt darin, dass je nach Wahl und Richtung der angeordneten Spalten eine gemeinsame Verlagerung, insbesondere eine Vergrößerung und/oder Verkleinerung der Profilgeometrie in senkrechter Richtung zum hindurchführbaren Gegenstand möglich ist. Es ist aber auch eine winkelige Verlagerung der zu verlagernden Formflächen in Bezug zu den ortsfesten Formflächen möglich.

Vorteilhaft ist auch eine weitere Ausführungsform nach Anspruch 3, da dadurch ohne hohen Bearbeitungsaufwand der Spalt an den vorgegebenen Stellen innerhalb der Kalibrierblende, beispielsweise durch Drahterosion angebracht werden kann und die Verstellung durch die dem Werkstoff innewohnenden Elastizitätseigenschaften durchgeführt werden können.

Durch die Ausbildung nach Anspruch 4 ist es möglich, das Ausmaß der Verlagerung an jeder beliebigen Stelle des Spaltes eindeutig festlegen zu können.

Nach einer anderen Ausführungsvariante gemäß Anspruch 5 wird mit Vorteil eine unterschiedliche Verlagerung von einzelnen Formflächen gegenüber den ortsfesten Formflächen erzielt.

Vorteilhaft ist weiters eine Ausbildung nach Anspruch 6, da dadurch einerseits der maximale Verstellweg und andererseits das Ausmaß desselben einfach festgelegt werden kann.

Vorteilhaft ist auch eine Weiterbildung nach Anspruch 7, weil dadurch rasch und auf einfache Weise auf sich verändernde Betriebsbedingungen und damit mögliche Maßabweichungen Rücksicht genommen werden kann und die bedarfsweise festgelegten und positioniert gehalterten Formflächen rasch in ihrer Lage neuerlich veränderbar sind.

Bei der Ausgestaltung nach Anspruch 8 ist von Vorteil, dass dadurch auch Maßabweichungen des Gegenstandes, beispielsweise in senkrechter Richtung zur Extrusionsrichtung, korrigiert werden können und dadurch der Aufwand für die Nacharbeit der Profilkontur an den einzelnen Kalibrierblenden stark verringert werden kann.

Durch die Weiterbildung nach Anspruch 9 oder 10 wird erreicht, dass rasch und einfach auf unterschiedlichste mögliche Konturänderungen Bedacht genommen werden kann und ohne hohen zusätzlichen Bearbeitungsaufwand die Profilkontur in der Kalibrierblende veränderbar ist.

Vorteilhaft ist auch eine Ausbildung nach Anspruch 11, da dadurch die auf den Teilabschnitt der Kalibrierblende einwirkende Kräfte sicher ohne nachhaltige Zerstörung der Kalibrierblende im Bereich der Profilkontur auf den feststehenden Teil derselben übertragen werden können.

Gemäß einer Ausbildung, wie im Anspruch 12 beschrieben, kann eine ebenflächige Ausbildung der Kalibrierblende auch im Bereich der Austrittsfläche erzielt werden.

Durch die Weiterbildung nach Anspruch 13 wird mit Vorteil erreicht, dass durch das Stellelement auf den zu verstellenden Abschnitt der Kalibrierblende eine Druck- bzw. Zugkraft je nach Ausbildung des Stellelementes ausgeübt werden kann und dadurch eine rasche Verlagerung der zu verstellenden Formflächen möglich ist.

Nach einer vorteilhaften Weiterbildung gemäß Anspruch 14 wird erreicht, dass eine definierte Verstellkraft, ausgehend vom Stellelement, in der vorgegebenen Richtung auf den zu verlagernden Teilabschnitt der Kalibrierblende ausgeübt werden kann.

Von Vorteil ist aber auch eine Ausbildung nach Anspruch 15, da dadurch einerseits der Verstellweg auf einer Seite eindeutig festgelegt und die Verstellbewegung, ausgehend von der anderen Seite, durchgeführt werden kann.

Gemäß Anspruch 16 oder 17 wird eine zusätzliche Abstützung des zu verlagernden Abschnitts der Kalibrierblende an den Stellelementen erzielt, wodurch auch noch auf diesen Teilbereich einwirkende Kräfte in paralleler Richtung zum hindurchführbaren Gegenstand von diesem aufgenommen werden können.

Möglich ist dabei auch eine Ausbildung nach Anspruch 18, da dadurch je nach Stärke des Distanzelementes in Verbindung mit der Spaltbreite eine exakte Begrenzung für den Verstellweg festgelegt ist.

Die Ausgestaltung nach Anspruch 19 ermöglicht, dass dadurch ein Verkanten und eine damit verbundene Beschädigung des hindurchführbaren Gegenstandes im Bereich seiner Oberfläche gesichert verhindert wird.

Vorteilhaft ist auch eine Ausbildung nach Anspruch 20, da dadurch je nach Wahl und Anordnung des Spaltes die Korrektur von Winkelfehlern am hindurchführbaren Gegenstand rasch bei Beibehaltung der Profilgeometrie durchgeführt werden kann.

Von Vorteil sind aber auch Ausbildungen nach den Ansprüchen 21 oder 22, da dadurch die gemeinsame Verlagerung von zu verlagernden Formflächen über deren gesamte Länge sowie auch nur über Teillängen derselben in bezug auf deren Winkeligkeit durchführbar sind.

Bei der Ausgestaltung gemäß Anspruch 23 ist von Vorteil, dass dadurch eine winkelige Verlagerung des zu verlagernden Teilabschnitts der Kalibrierblende gegenüber den feststehenden Teilen derselben sicher durchgeführt werden kann.

Bei der Ausgestaltung nach Anspruch 24 ist von Vorteil, dass dadurch der zu verlagernde Abschnitt der Kalibrierblende über jene Teillänge des Spaltes, in welcher die Distanz in etwa gleichbleibend ausgebildet ist, annähernd gleiche mechanische Festigkeitskennwerte aufweist und bei Einwirken einer Verstellkraft in etwa gleichbleibende Verformungseigenschaften aufweist.

Vorteilhaft ist auch eine weitere Ausführungsform nach Anspruch 25, da dadurch das Ausmaß der gewünschten Verlagerung auf unterschiedlichste Verlagerungswege abgestimmt werden kann.

Bei der Ausgestaltung gemäß Anspruch 26 ist von Vorteil, dass durch die stetige Zunahme der Distanz je nach dem Ausmaß der Zunahme die Festigkeitskennwerte in bezug zur aufgebrachten Verstellkraft einfach festlegbar sind.

Vorteilhaft ist weiters auch eine Ausbildung nach Anspruch 27, da dadurch je nach Wahl und Richtung der angeordneten Spalten eine gemeinsame Verlagerung, insbesondere eine Vergrößerung und/oder Verkleinerung der Profilgeometrie in senkrechter Richtung zum hindurchführbaren Gegenstand möglich ist.

Durch die Ausbildung nach Anspruch 28 kann eine annähernd parallele Verstellung der Formflächen zueinander erzielt werden.

Schließlich erweist sich eine Ausgestaltung nach Anspruch 31 als vorteilhaft, da sowohl der Einsatzteil, insbesondere dessen Halteteil als auch die dem Halteteil zugeordnete Aufnahmeöffnung jeweils mit bevorzugt senkrecht zu den Stirnflächen bzw. parallel zur Extrusionsrichtung ausgerichteten bzw. sich erstreckenden Hüllflächen umgrenzt sind, welche einfach und kostengünstig herzustellen sind. Gleichfalls wird dadurch auch eine exakte Führungsanordnung für den Einsatzteil in der Kalibrierblende geschaffen, welche eine exakte Ausrichtung des Einsatzteils in seiner Einsatzstellung in bezug zur Kalibrierblende und somit auch zum hindurchführbaren Gegenstand gewährleistet. Durch die über einen Großteil des Umfangsbereiches sowohl im Bereich der Aufnahmeöffnung als auch am Halteteil angeordneten und zusammenwirkenden Begrenzungsanschläge mit Anschlagflächen für die Führungsanordnung wird eine Begrenzung der Verschiebebewegung erreicht, wobei zusätzlich auch noch eine Abstützung und damit verbunden eine Kraftübertragung von der durch den am Einsatzteil anliegenden Gegenstand aufgebrachten Kraft auf die Kalibrierblenden erzielt wird. Die zusammenwirkenden Anschlagflächen sind einfach herzustellen und können eine ausreichende Kraftübertragung sicherstellen.

Die Erfindung wird im nachfolgenden anhand der in den Zeichnungen dargestellten Ausführungsbeispiele näher erläutert.

Es zeigen:
- Fig. 1: eine Extrusionsanlage in Seitenansicht und stark vereinfachter, schematischer Darstellung;
- Fig. 2: eine erfindungsgemäße Kalibrierblende für die Formgebungseinrichtung in Ansicht und vereinfachter, schematischer Darstellung;
- Fig. 3: die Kalibrierblende nach Fig. 2 in Seitenansicht geschnitten gemäß den Linien III-III in Fig. 2;
- Fig. 4: eine weitere mögliche erfindungsgemäße Ausbildung der Kalibrierblende mit dieser zugeordneten Stellelementen, in Ansicht und vereinfachter, schematischer Darstellung;
- Fig. 5: einen Teilbereich der Kalibrierblende in Seitenansicht geschnitten, gemäß den Linien V-V in Fig. 4 sowie vereinfachter, vergrößerter Darstellung;
- Fig. 6: eine andere erfindungsgemäße Ausbildung der Kalibrierblende in Ansicht und schematisch, vereinfachter Darstellung;
- Fig. 7: eine weitere mögliche erfindungsgemäße Ausbildung der Kalibrierblende in Ansicht;
- Fig. 8: eine andere Ausführungsform der Kalibrierblende in Ansicht, teilweise geschnitten und vereinfachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

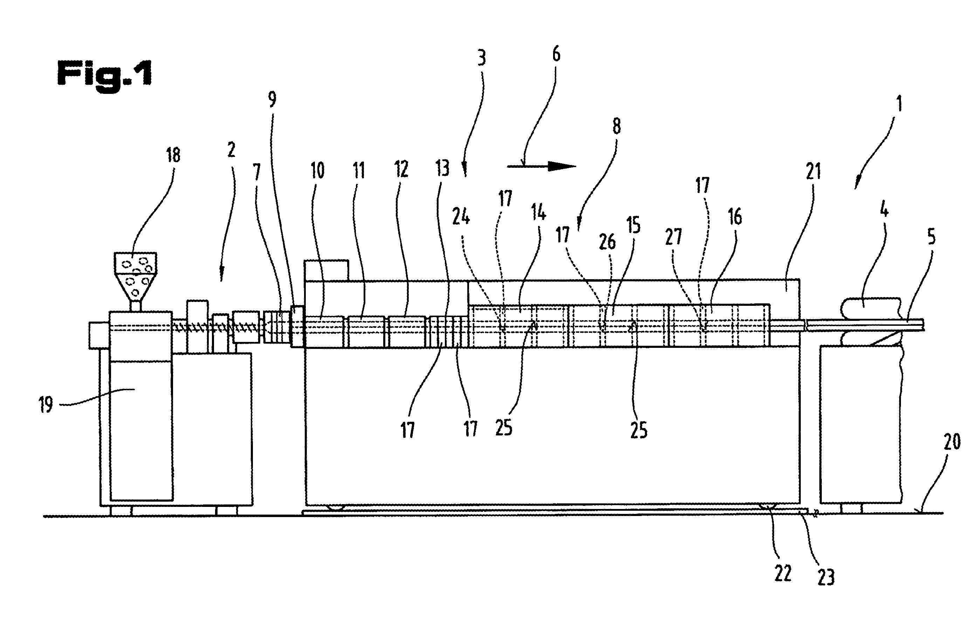

In der Fig. 1 ist eine Extrusionsanlage 1 gezeigt, die aus einem Extruder 2, einer diesem nachgeordneten Formgebungseinrichtung 3 sowie einem dieser nachgeordneten Raupenabzug 4 für einen extrudierten Gegenstand 5 besteht. Der Raupenabzug 4 dient dazu, um den Gegenstand 5, beispielsweise ein Profil, insbesondere ein Hohlprofil aus Kunststoff, für den Fenster-und/oder Türenbau in Extrusionsrichtung 6, ausgehend vom Extruder 2, durch die gesamte Formgebungseinrichtung 3 abzuziehen. Die Formgebungseinrichtung 3 besteht bei diesem Ausführungsbeispiel aus einem dem Extruder 2 zugeordneten Extrusionswerkzeug 7, einer Kalibriervorrichtung 8 aus mindestens einem, bevorzugt jedoch mehreren Kalibrierwerkzeugen 9 bis 13 und zumindest einem, bevorzugt jedoch mehreren Unterdrucktanks 14 bis 16, in welchen mehrere Kalibrierblenden 17 angeordnet sind. Einzelne der Kalibrierblenden 17 können aber auch nur zur Stützfunktion als Stützblenden für den Gegenstand 5 ausgebildet sein.

Im Bereich des Extruders 2 befindet sich ein Aufnahmebehälter 18, in welchem ein Material, wie beispielsweise ein Gemisch bzw. ein Granulat zur Bildung eines Kunststoffes, bevorratet ist, welches mit zumindest einer Förderschnecke im Extruder 2 dem Extrusionswerkzeug 7 zugeführt wird. Weiters umfasst der Extruder 2 noch eine Plastifiziereinheit, durch welche während des Durchtretens des Materials durch diese mittels der Förderschnecke sowie gegebenenfalls zusätzlicher Heizeinrichtungen das Material gemäß den diesem innewohnenden Eigenschaften unter Druck und gegebenenfalls Zufuhr von Wärme erwärmt und plastifiziert und in Richtung des Extrusionswerkzeuges 7 gefördert wird. Vor dem Eintritt in das Extrusionswerkzeug 7 wird der Massestrom aus dem plastifizierten Material in Übergangszonen hin zum gewünschten Profilquerschnitt geführt.

Das Extrusionswerkzeug 7, die Plastifiziereinheit und der Aufnahmebehälter 18 sind auf einem Maschinenbett 19 abgestützt bzw. gehaltert, wobei das Maschinenbett 19 auf einer ebenen Aufstandsfläche 20, wie beispielsweise einem ebenen Hallenboden, aufgestellt ist.

Die gesamte Kalibriervorrichtung 8 ist bei diesem Ausführungsbeispiel auf einem Kalibriertisch 21 angeordnet bzw. gehaltert, wobei sich der Kalibriertisch 21 über Laufrollen 22 auf einer oder mehreren auf der Aufstandsfläche 20 befestigten Fahrschienen 23 abstützt. Diese Lagerung des Kalibriertisches 21 über die Laufrollen 22 auf den Fahrschienen 23 dient dazu, um den gesamten Kalibriertisch 21 mit den darauf angeordneten Ein- bzw. Vorrichtungen in Extrusionsrichtung 6 - gemäß eingetragenem Pfeil - vom bzw. hin zum Extrusionswerkzeug 7 verfahren zu können. Um diese Verstellbewegung leichter und genauer durchführen zu können, ist dem Kalibriertisch 21 beispielsweise ein nicht näher dargestellter Verfahrantrieb zugeordnet, der eine gezielte und gesteuerte Längsbewegung des Kalibriertisches 21 hin zum Extruder 2 oder vom Extruder 2 weg ermöglicht. Für den Antrieb und die Steuerung dieses Verfahrantriebes können jegliche aus dem Stand der Technik bekannte Lösungen und Aggregate verwendet werden.

Die Kalibrierwerkzeuge 9 bis 13 der Kalibriervorrichtung 8 sind auf einer Aufnahmeplatte abgestützt und beispielsweise als Vakuumkalibrierung ausgebildet, wobei die Kalibrierung des extrudierten Gegenstandes 5 innerhalb der einzelnen Formgebungs- bzw. Kalibrierwerkzeuge 9 bis 13 erfolgt. Zusätzlich kann die Anordnung der Vakuumschlitze, der Kühlabschnitte und der Strömungskanäle bzw. Kühlbohrungen sowie deren Anschlüsse und Versorgung gemäß dem bekannten Stand der Technik erfolgen. Gleichfalls kann eines, aber auch mehrere der Kalibrierwerkzeuge 9 bis 13 aus einzelnen hintereinander und unmittelbar benachbarten Kalibrierblenden gebildet sein, wie dies in dem AT 003 321 U1 bereits detailliert beschrieben worden ist. Die nachfolgend beschriebenen Ausbildungen und Anordnungen zur Verlagerung von zumindest Teilen der einzelnen Formflächen können sinngemäß auch hier eingesetzt werden bzw. Anwendung finden.

Diese Kalibrierung kann beispielsweise eine Kombination aus Trocken- und Naßkalibrierung bzw. nur eine vollständige Trockenkalibrierung umfassen. Weiters kann auch ein Zutritt von Umgebungsluft zumindest zwischen dem Extrusionswerkzeug 7 und dem ersten Kalibrierwerkzeug 9 und/oder zumindest zwischen dem ersten Kalibrierwerkzeug 9 und weiteren Kalibrierwerkzeugen 10 bis 13 vollständig verhindert werden. Selbstverständlich ist es aber auch möglich, zumindest bereichsweise zwischen den einzelnen Kalibrierwerkzeugen 9 bis 13 einen Zutritt von Umgebungsluft hin zum Gegenstand 5 zu ermöglichen bzw. Wasserbäder anzuordnen.

Der Unterdrucktank 14 bis 16 weist für den aus den Kalibrierwerkzeugen 9 bis 13 austretenden Gegenstand 5 zumindest eine Kühlkammer auf, welche durch ein vereinfacht dargestelltes Gehäuse gebildet ist und durch die im Innenraum angeordneten und vereinfacht dargestellten Kalibrierblenden 17 in unmittelbar aufeinanderfolgende Bereiche unterteilt ist. Zur raschen Wärmeabfuhr aus dem Gegenstand 5 ist der Innenraum der Kühlkammer mit einem Kühlmedium zumindest teilweise gefüllt, wobei das Kühlmedium sowohl flüssig als auch gasförmig sein kann. Selbstverständlich kann das gleiche Kühlmedium aber auch in unterschiedlichen Aggregatzuständen in der Kühlkammer vorhanden sein. Es ist aber auch zusätzlich noch möglich, den Innenraum der Kühlkammer auf einen gegenüber dem atmosphärischen Luftdruck geringeren Druck abzusenken.

Der Gegenstand 5 weist nach dem Austritt aus dem Extrusionswerkzeug 7 eine durch dieses vorgegebene Querschnittsform auf, welche in den daran anschließenden Kalibrierwerkzeugen 9 bis 13 ausreichend kalibriert und/oder gekühlt wird, bis der zähplastische Gegenstand 5 oberflächlich bzw. im Randbereiche desselben soweit abgekühlt ist, dass seine Außenform stabil sowie in ihren Abmessungen entsprechend ausgebildet ist. Anschließend an die Kalibrierwerkzeuge 9 bis 13 durchläuft der Gegenstand 5 die Unterdrucktanks 14 bis 16, um eine weitere Abkühlung und gegebenenfalls Kalibrierung sowie Abstützung zu erreichen und so die im Gegenstand 5 noch enthaltene Restwärme abzuführen.

Für den Betrieb der Extrusionsanlage 1, insbesondere den am Kalibriertisch 21 angeordneten bzw. gehalterten Ein- bzw. Vorrichtungen sind diese mit einer nicht näher dargestellten Versorgungseinrichtung verbindbar, mit welcher die unterschiedlichsten Aggregate, beispielsweise mit einem flüssigen Kühlmedium, mit elektrischer Energie, mit Druckluft sowie mit einem Vakuum, beaufschlagt werden können. Die unterschiedlichsten Energieträger können je nach Bedarf frei gewählt und eingesetzt werden.

Zum Hindurchführen des Gegenstandes 5 durch die einzelnen Kalibrierblenden 17 weisen diese zumindest eine Kalibrieröffnung 24 bzw. einen Durchbruch auf, wobei einzelne Formflächen 25, 26 der Kalibrieröffnung 24 zumindest bereichsweise einen äußeren Profilquerschnitt 27 des hindurchführbaren Gegenstandes 5 begrenzen bzw. umgrenzen. Wie bereits zuvor beschrieben, wird der Gegenstand 5 während des Hindurchtretens durch die einzelnen Kalibrierwerkzeuge 9 bis 13 im Bereich seiner äußeren Wandungen soweit abgekühlt und das erweichte Kunststoffmaterial soweit verfestigt, dass die äußeren Profilsektionen des Hohlprofils bereits eine gewisse Eigensteifigkeit bzw. Festigkeit aufweisen. Um die noch im Profilinnenraum vorhandene Restwärme insbesondere im Bereich der Hohlkammern und der darin angeordneten Stege vollständig aus dem Gegenstand 5 abführen zu können, sind bei diesem Ausführungsbeispiel die Unterdrucktanks 14 bis 16 mit den darin angeordneten Kalibrierblenden 17 vorgesehen.

Während dieses weiteren Abkühlungs- und Verfestigungsprozesses kommt es aufgrund der über den Querschnitt gesehen unterschiedlichen Wärmeabfuhr zum Aufbau von inneren Spannungen im Bereich des Profilquerschnittes, wodurch der Gegenstand 5 an vorbestimmbaren Stellen seines Querschnittes derart zu führen ist, dass die geforderte Maßhaltigkeit, insbesondere im Bereich von Anschlussmassen, Dichtungsnuten usw. in ausreichender Genauigkeit erzielbar ist. Dabei treten im Bereich derartiger Führungs- bzw. Anlagestellen, ausgehend vom Gegenstand 5 hin auf die Kalibrierblenden 17, hohe Druck- und Reibungskräfte auf, wodurch an diesen vorbestimmbaren Stellen ein erhöhter Verschleiß und in weiterer Folge damit verbunden eine immer stärker werdende Maßabweichung auftritt. Bedingt durch diese über den Querschnitt zeitlich versetzte Abkühlung und die damit verbundene Verfestigung der Kunststoffmasse kommt es auch zu Verlagerungen der gesamten Profilgeometrie, wodurch Nachbearbeitungen einzelner Formflächen 25 bzw. 26 der Kalibrieröffnung 24 notwendig werden, um die geforderte Maßhaltigkeit des herzustellenden Gegenstandes 5 gewährleisten zu können.

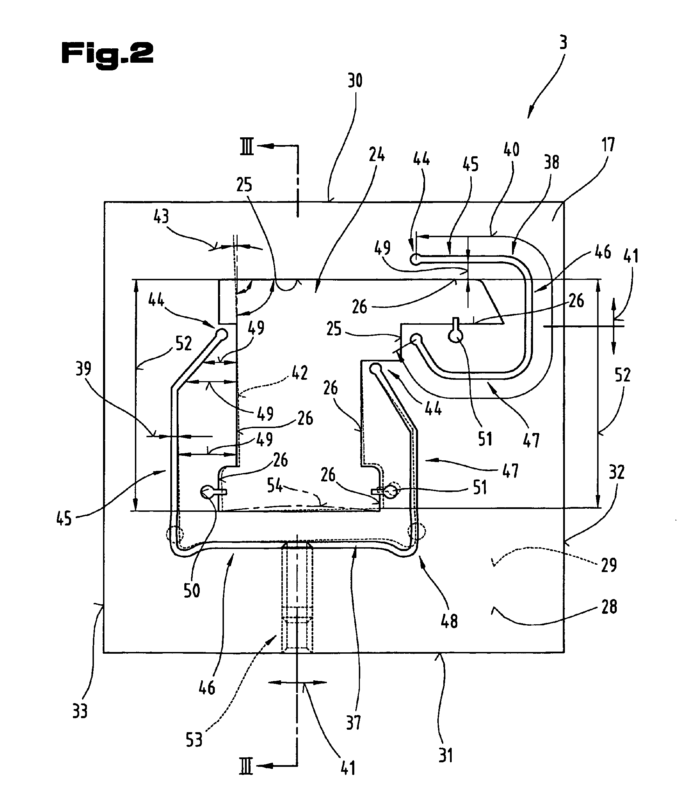

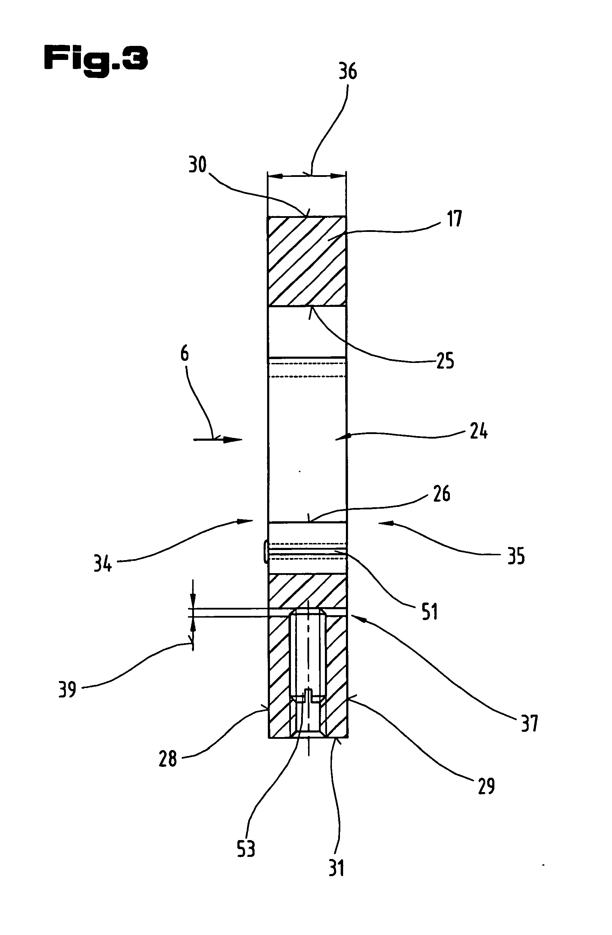

In den Fig. 2 und 3 ist in vereinfachter und vergrößerter Darstellung die Kalibrierblende 17 mit der Kalibrieröffnung 24 und den diesen umgrenzenden Formflächen 25, 26 gezeigt, wobei der Einfachheit halber die Querschnittsform der Kalibrieröffnung 24 nur beispielhaft für eine Vielzahl möglicher Profilquerschnitte gewählt worden ist.

Die Kalibrierblende 17 weist in Extrusionsrichtung 6 voneinander distanzierte, bevorzugt parallel zueinander ausgerichtete Eintritts- bzw. Austrittsflächen 28, 29 sowie zwischen diesen sich erstreckende Seitenflächen 30 bis 33 auf. Dabei bildet die Eintrittsfläche 28 einen Eintrittsbereich 34 und die in Bewegungsrichtung nachfolgende Austrittsfläche 29 einen Austrittsbereich 35 für den hindurchführbaren Gegenstand 5 (nicht dargestellt, siehe Fig. 1) aus. Dabei ist eine Längsachse für den durch die Kalibrieröffnung 24 hindurchführbaren Gegenstand 5 im wesentlichen senkrecht zur Eintritts- bzw. Austrittsfläche 28, 29 ausgerichtet.

Wie bereits in der Fig. 1 beschrieben, sind die Kalibrierblenden 17 bevorzugt in den Unterdrucktanks 14 bis 16 voneinander distanziert angeordnet und weisen zwischen den Eintritts- bzw. Austrittsflächen 28, 29 eine Dicke 36 zwischen 2 mm und 400 mm, bevorzugt zwischen 5 mm und 20 mm, auf. Dabei dienen diese Kalibrierblenden 17 zur endgültigen Festlegung der äußeren Profilkontur des Gegenstandes 5, insbesondere der winkeligen Ausrichtung bzw. Maßhaltigkeit von Außenflächen bzw. Aufnahmen für unterschiedlichste Einsatzelement, wie beispielsweise Dichtungen usw. Da während des Abkühlvorganges innerhalb der Unterdrucktanks 14 bis 16 aufgrund unterschiedlich aufgebauter innerer Spannungen über den Profilquerschnitt es noch zu ungewollten Verlagerungen von einzelnen Profilpartien kommen kann, kommt diesen Kalibrierblenden 17 für die endgültige Formgebung des Gegenstandes 5 eine wesentliche Bedeutung zu. Bei bisher schwer zu bestimmenden bzw. vorhersehbaren Verlagerungen und der damit verbundenen Maßungenauigkeit des Profilquerschnittes des Gegenstandes 5 war es notwendig, beispielsweise bei winkeligen Verlagerungen einzelne Formflächen 25 durch einen Materialauftrag und einer damit nachfolgend verbundenen weiteren Bearbeitung zu korrigieren bzw. an weiteren Formflächen 25 einen Materialabtrag vorzunehmen, um so die Korrektur zur Erzielung des vorgegebenen Profilquerschnittes erreichen zu können. Dies war mit hohem Bearbeitungsaufwand verbunden, welcher sehr zeit- und kostenintensiv war.

Zur besseren Verständlichkeit werden in der nachfolgenden Beschreibung der einzelnen Fig. in bezug zur Kalibrierblende 17 ortsfeste Formflächen stets mit dem Bezugszeichen 25 und relativ zu dieser ortsfesten Formfläche 25 verlagerbare Formflächen stets mit dem Bezugszeichen 26 bezeichnet.

Bei diesem hier in der Fig. 2 dargestellten Ausführungsbeispiel ist für zwei unterschiedliche Profilabschnitte des Gegenstandes 5 bei der Kalibrieröffnung 24 eine von vielen unterschiedlichen Möglichkeiten zur zusammenhängenden und gemeinsamen Verlagerung mehrerer Formflächen 26 der Kalibrieröffnung 24, gegenüber zumindest einer weiteren ortsfesten Formfläche 25 der gleichen Kalibrieröffnung 24 vereinfacht dargestellt. Dabei ist den zu verlagenden Formflächen 26 zwischen diesen und den diesen benachbarten und die Kalibrierblende 17 begrenzenden Seitenflächen 30 bis 33 - im vorliegenden Ausführungsbeispiel die Seitenflächen 31 bis 33 - ein von der Eintrittsfläche 28 bis zur Austrittsfläche 29 durchragender Spalt 37, 38 angeordnet. Der Spalt 37, 38 ist durchlaufend den zu verlagernden Formflächen 26 benachbart zugeordnet und weist eine Spaltbreite 39 in paralleler Richtung zu der Eintritts- bzw. Austrittsfläche 28, 29, zwischen 0,1 mm und 15 mm, bevorzugt zwischen 0,25 mm und 0,8 mm, auf. Die Spaltbreite 39 hängt vom Ausmaß der relativen Verlagerung der zu verlagernden Formflächen 26 in bezug zur ortsfesten Formfläche 25 ab. Als vorteilhaft hat sich herausgestellt, wenn die Spaltbreite 39 des Spaltes 37 bzw. 38 über dessen Längsverlauf 40 vor der Verlagerung der Formflächen 26 durchlaufend gleich ausgebildet ist. Je nach Fertigungsart des Spaltes 37 bzw. 38 kann aber auch die Spaltbreite 39 über dessen Längsverlauf 40 vor der Verlagerung der Formflächen 26 ungleich gewählt sein. Weiters ist noch vereinfacht dargestellt, dass jener Abschnitt der Kalibrieröffnung 24 mit den Formflächen 26, welcher den Seitenflächen 31 bzw. 32 und 33 zugeordnet ist, nach der Verlagerung in Richtung eines Doppelpfeils 41 eine in strichlierten Linien angedeutete Position einnimmt und diesen verlagerten Formflächen das Bezugszeichen 42 zugeordnet ist.

Wesentlich dabei ist, dass der Spalt 37, 38 zumindest zwischen mehreren einander unmittelbar benachbarten Teilen bzw. Längsabschnitten von mehreren Formflächen 26 der Kalibrieröffnung 24 und zumindest einer der Seitenflächen 30, 31, 32, 33 angeordnet ist und zumindest die dem Spalt 37, 38 zugeordneten Teile bzw. Längsabschnitte der Formflächen 26 gegenüber den anderen Formflächen 25 relativ dazu verstellbar sind.

Durch die nachfolgend noch beschriebene unterschiedliche Anordnungsmöglichkeit des Spaltes 37 bzw. 38 in bezug zu den zu verlagernden Formflächen 26 sowie die Wahl der Spaltbreite 39 kann das Ausmaß der Verlagerung, hier im vorliegenden Ausführungsbeispiel eine winkelige Verlagerung, erzielt werden. Sind die zu verlagernden Formflächen 26 in ihrer neuen Lage relativ zur ortsfesten Formfläche 25 festgelegt, so sind diese in ihrer verlagerten Position im bezug zur ortsfesten Formfläche 25 positioniert zu haltern. Dies kann beispielsweise dadurch erfolgen, dass die verlagerbaren Abschnitte bzw. Teile der Kalibrierblende 17 mit jenen auf der gegenüberliegenden Seite des Spaltes 37, 38 und relativ zu diesen feststehenden Teilen der Kalibrierblende 17 mittels einer Feststellvorrichtung, beispielsweise eines Schweißpunktes - wie dieser vereinfacht in der Fig. 2 mit einem strichlierten Kreis angedeutet ist - eines Verbindungselements, wie beispielsweise Bolzen, Kegelstifte, Schrauben, Keile, Nieten oder ähnlichem, bedarfsweise lösbar gehaltert sind. Es können aber auch Löt- bzw. Klebeverbindungen in den unterschiedlichsten Ausbildungen Anwendung finden. Weiters kann aber auch mittels einer Verschraubung eine Klemmung und damit verbunden eine Lagefixierung bewirkt werden. Auch der Einsatz von konischen Gewinden, wie z.B. NPT-Gewinden, von unterschiedlichsten Exzenterverstellungen sowie gegebenenfalls auch der Einsatz von fernbetätigbaren Verstellmitteln ist möglich, mit welchen eine halb- und/oder vollautomatische Lageveränderung der zu verstellenden Formflächen 26 durchführbar ist. Diese zuvor beschriebenen Mittel können aber auch nur zur Lageverstellung alleine aber auch in beliebiger Kombination sowohl zur Lageverstellung und/oder als Feststellvorrichtung eingesetzt werden.

Ist eine weitere Korrektur der Lage der zu verstellenden Formflächen 26 relativ zu den ortsfesten Formflächen 25 notwendig, ist diese Feststellvorrichtung zu lösen, beispielsweise durch Aufschleifen der oder des Schweißpunktes und eine erneute relative Verlagerung vorzunehmen und wiederum in der gewünschten Endposition positioniert zu haltern. Dadurch ist es möglich, ohne Nachbearbeitung, von einzelnen Formflächen eine oftmalige Verstellung durchführen zu können, wobei die Verlagerung der zu verlagernden Formflächen 26 in paralleler Richtung zu der Eintrittsfläche 28 bzw. Austrittsfläche 29 erfolgt.

Eine weitere Anordnungsmöglichkeit des Spaltes 38 ist in jenem Teil der Kalibrieröffnung 24 dargestellt, welcher den Seitenflächen 30, 32 der Kalibrierblende 17 zugewandt ist. Bei derartigen, über das Hauptprofil vorragenden Profilpartien des Gegenstandes 5 ist häufig eine Winkelkorrektur durchzuführen, wobei dies wiederum in paralleler Richtung zu den Eintrittsfläche 28 bzw. Austrittsfläche 29, gemäß dem eingetragenen Doppelpfeil 41, möglich ist. Die ortsfeste Positionierung nach der Verlagerung der zu verlagernden Formflächen 26, in bezug zur ortsfesten Formfläche 25, kann, wie bereits zuvor beschrieben, erfolgen.

Weiters ist in diesem Ausführungsbeispiel in Fig. 2 noch gezeigt, dass die der Seitenflächen 33 zugeordnete, zu verlagernde Formfläche 26 zu der nach der Verlagerung in strichlierten Linien eingezeichnete verlagerte Formfläche 42 in bezug zur ortsfesten Formfläche um einen vorbestimmten Verlagerungswinkel 43 verschwenkt ist. So ist beispielsweise die zu verlagernde Formfläche 26 rechtwinkelig zur ortsfesten Formfläche 25 ausgerichtet, wobei die nach der Verlagerung verlagerte Formfläche 42 mit der ortsfesten Formfläche 25 einen geringeren Winkel als den rechten Winkel einschließt und sich aus der Differenz der Verlagerungswinkel 43 berechnet.

Der notwendige Verlagerungswinkel 43 kann über den Startpunkt 44 des Spaltes 37, 38 in bezug zur verlagernden Formfläche 26 sowie die Distanz zwischen dem Spalt 37 und der diesem zugeordneten und zu verlagernden Formfläche 26 festgelegt werden.

Der Startpunkt 44 ist festigkeitsmäßig derart in bezug zur Formfläche 25, 26 zu wählen, dass einerseits eine Verlagerung einzelner Teilabschnitte der Kalibrieröffnung 24 erfolgen kann und andererseits noch eine ausreichende Festigkeit vorhanden ist, um eine Trennung und eine damit verbundene Zerstörung der verlagerbaren Abschnitte der Kalibrierblende 17 zu verhindern.

Betrachtet man nun den Längsverlauf 40 der in der Fig. 2 dargestellten Spalte 37, 38, so weisen diese zumindest drei zusammenhängende Teilbereiche 45 bis 47 auf, welche im wesentlichen winkelig zueinander ausgerichtet sind. Dabei können auch die Teilbereiche 45 bis 47 des Spaltes 37, 38 in einer parallel zu den Eintritts- bzw. Austrittsflächen 28 bzw. 29 ausgerichteten Ebene einen in etwa U- bzw. C-förmig ausgerichteten Längsverlauf 40 aufweisen. Als Verbindungsbereich 48, zwischen den einzelnen Teilbereichen 45 bis 47 der Spalte 37, 38 kann beispielsweise ein Kreisbogen angeordnet sein. Selbstverständlich ist es aber auch möglich, diesen Verbindungsbereich mit jeder beliebigen Raumform auszubilden, wobei lediglich darauf bedacht zu nehmen ist, dass eine ungehinderte Verlagerung jener Teile der Kalibrierblende 17 mit den zu verlagernden Formflächen 26 erfolgen kann. Durch die Wahl der Startpunkte 44 und das Ausmaß der Verlagerung ist zumeist in dem zwischen der Formfläche 25 und dem Starpunkt 44 angeordneten Bereich eine elastische Verformung des Materials der Kalibrierblende 17 vorhanden, wobei selbstverständlich aber auch bei größeren Verlagerungen eine elastische Deformation des Werkstoffes der Kalibrierblende 17 erfolgen kann.

Betrachtet man nun den Längsverlauf 40 des Spaltes 37, ausgehend von dem der Seitenflächen 33 zugeordneten Starpunkt 44, so ist eine Distanz 49 zwischen der Formfläche 26 und dem diesem zugeordneten Teilbereich 45 des Spaltes 37 stetig zunehmend ausgebildet. Im weiteren Längsverlauf 40 ist dann die Distanz 49 zwischen der Formfläche 26 und dem diesen zugeordneten Teilbereich 45 des Spaltes 37 in etwa gleichbleibend ausgebildet. Der Spalt 37 verläuft somit annähernd parallel zur Formfläche 26 vor deren Verlagerung. Durch eine unterschiedliche Distanz 49 zu den diesen zugeordneten Teilbereichen 45 bis 47 des Spaltes 37, 38 wird ein unterschiedliches Verformungsverhalten der zu verlagernden Teilabschnitte der Kalibrierblende 17 erreicht.

Ähnlich ist auch der Längsverlauf 40 des Spaltes 37, ausgehend vom weiteren Startpunkt 44 des gleichen Spaltes 37 im Bereich der der Seitenflächen 32 zugeordneten Formfläche 26 der gleichen Profilpartie bzw. der Kalibrieröffnung 24 gewählt. Durch das Ausmaß bzw. die Höhe der Zunahme der Distanz 49, ausgehend vom Starpunkt 44 in bezug zur Formfläche 26, kann das Verlagerungsverhalten der zu verlagernden Formfläche 26 beeinflusst werden. Je rascher die Zunahme der Distanz 49 erfolgt, desto rascher nimmt die Festigkeit des zu verlagernden Abschnittes der Kalibrierblende 17 zu und es stellt sich eine rasche Winkeländerung beinahe in Form eines Knickes in der zu verlagernden Formfläche 26 ein, wobei der weitere Längsverlauf der Formfläche 26 in etwa geradlinig bleibt. Je größer die Distanz 49 zwischen der zu verlagernden Formfläche 26 und dem Spalt 37, 38 ist, desto höher ist die Festigkeit des zu verlagernden Teilabschnitts der Kalibrierblende 17 und es erfolgt großteils nur eine winkelige Verlagerung der Formflächen 26 im Bereich des Startpunktes 44 in bezug zur ortsfesten Formfläche 25.

Betrachtet man hingegen den Teilabschnitt 45 des weiteren Spaltes 38 im Bereich der Seitenfläche 30, so ist die Distanz 49 in etwa gleichbleibend in Bezug zur verlagernden Formfläche 26 gewählt, wodurch bei der Verlagerung die Formfläche 26 einen gekrümmten, insbesondere bogenförmigen Verlauf bei Ansicht auf die Eintritts- bzw. Austrittsflächen 28, 29 aufweist.

Weiters ist noch dargestellt, dass im Umfangsbereich der Kalibrieröffnung 24 sich, ausgehend von der Formfläche 25 bzw. 26, zumindest eine in dieser vertiefte Aufnahmeöffnung 50 angeordnet ist, in welche ein verschleißfester Einsatzteil 51 eingesetzt ist und bereichsweise in die Kalibrieröffnung 24 hineinragt. Die Ausbildung und Anordnung des Einsatzteils 51 in der Kalibrierblende 17 kann gemäß dem AT 004 440 U1 erfolgen, wobei hier, um unnötige Wiederholungen zu vermeiden, auf die in diesem Gebrauchsmuster enthaltenen Offenbarungen hingewiesen bzw. bezug genommen wird.

Wesentlich bei der Anordnung des Spaltes 37, 38 in bezug zu den Formflächen 26 ist, dass je nach gewünschter Verlagerung ein Abstand 52 zwischen zumindest einem Teilabschnitt einer der verlagerten Formflächen 42 in bezug zur ortsfesten Formfläche 25 veränderbar ausgebildet ist. Dabei kann der Abstand 52 nach der Verlagerung der Formfläche 26 größer und/oder kleiner sein als vor der Verlagerung.

Zusätzlich zur winkeligen Verlagerung der Formflächen 26 kann es aber auch noch vorteilhaft sein, wenn zumindest eine der Formflächen 25, 26 in ihrem Längsverlauf veränderbar ist. Dies kann dann der Fall sein, wenn beispielsweise eine äußere Oberfläche des herzustellenden Gegenstandes 5 ebenflächig ausgebildet sein soll, jedoch im Querschnitt eine Wölbung nach außen aufweist. Eine Korrektur kann dadurch erfolgen, wenn der betreffenden Formfläche 26 - hier im vorliegenden Fall die dem Teilbereich 46 des Spaltes 37 zugeordnete Formfläche 26-ein Stellelement 53 zugeordnet ist. Dieses Stellelement 53 kann beispielsweise in Form einer Gewindespindel bzw. Wurmschraube, eines Druckelements usw. ausgebildet sein, welche in ein gegengleich dazu ausgebildetes Gewinde eingeschraubt werden kann, welches, ausgehend von der Seitenfläche 31, sich in Richtung der gegenüberliegenden Seitenfläche 30 erstreckt. Das Ende des Stellelementes 53, welches dem Spalt 37 zugewandt ist, überbrückt diesen und übt je nach Verstellweg bzw. Einschraubtiefe auf den von der Seitenfläche 31 abgewandten Teilabschnitt der Kalibrierblende 17 eine entsprechende Kraft aus und verformt die Formfläche 26, wie dies in strichpunktierten Linien vereinfacht dargestellt worden ist und bildet so eine gewölbte Formfläche 54 aus. Je nach Bedarf können selbstverständlich auch mehrere Stellelemente 53 den jeweiligen verlagernden Formflächen 26 zugeordnet sein, wobei auch mehrere dieser Stellelemente 53 der gleichen Formfläche 26 zugeordnet sein können.

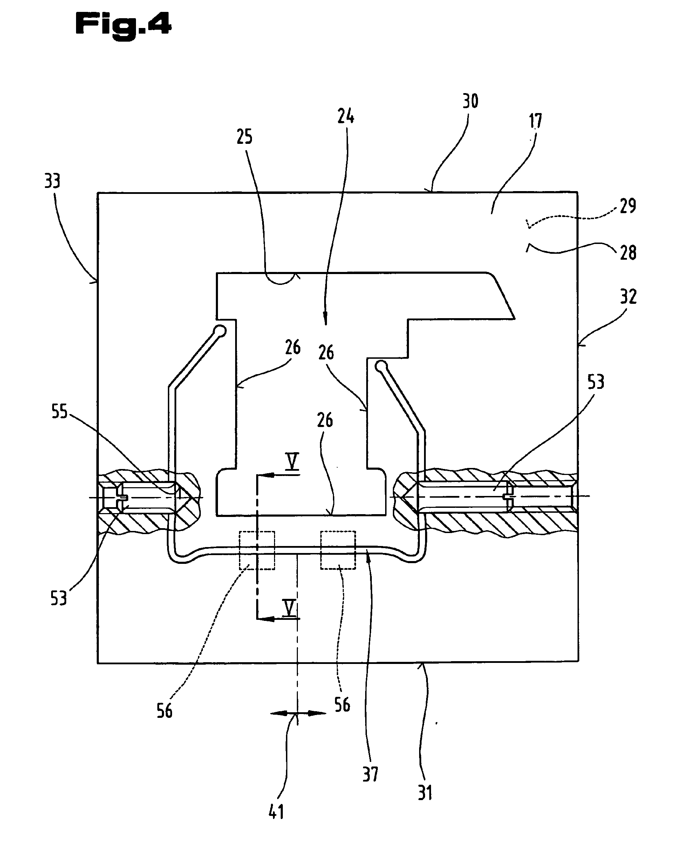

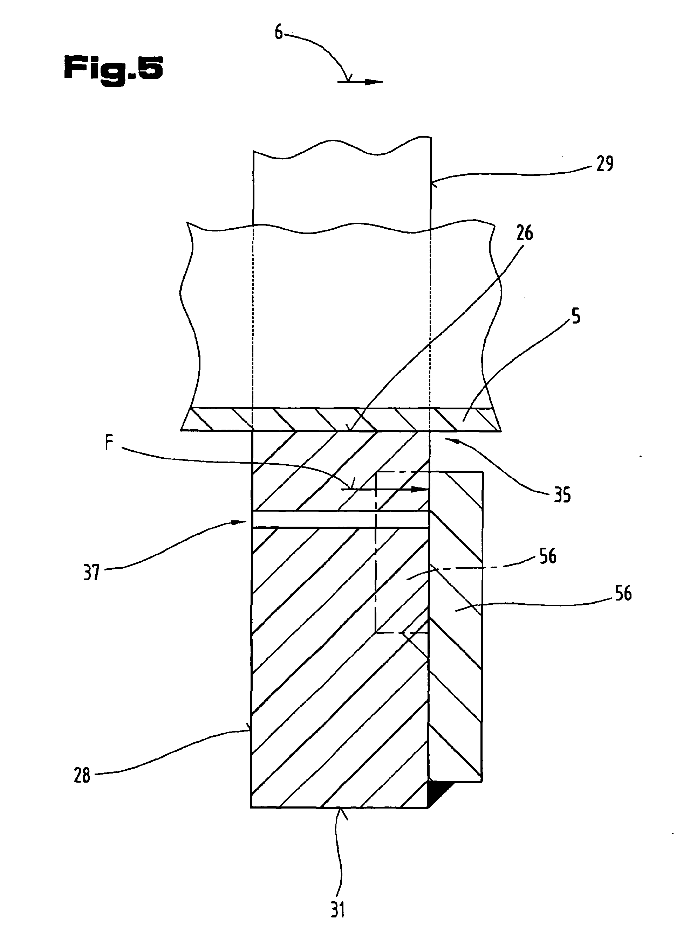

In den Fig. 4 und 5 ist eine weitere Anordnungsmöglichkeit von Stellelementen 53 gezeigt, wobei der Einfachheit halber nur ein einziger Spalt 37 der Kalibrieröffnung 24 zugeordnet ist. Um unnötige Wiederholungen zu vermeiden, wird auf die Beschreibung der vorangegangen Fig. 1 bis 3 hingewiesen bzw. bezug genommen sowie für gleiche Teile wiederum gleiche Bezugszeichen verwendet. Ebenfalls wurde auf die Darstellung des Einsatzteils 51 verzichtet, wobei dieser aber selbstverständlich auch bei dieser Ausführungsform Anwendung finden kann.

Für die zuvor beschriebene Verlagerung der Formflächen 26, in bezug zu ortsfesten Formfläche 25 der Kalibrierblende 17, ist bei diesem Ausführungsbeispiel gezeigt, dass zumindest ein Stellelement 53, bevorzugt jedoch zwei Stellelemente 53, vorgesehen sind, welche im Bereich ausgehend von den Seitenflächen 32 bzw. 33 in Richtung der Kalibrieröffnung 24 in der Kalibrierblende 17 angeordnet sind. Diese Stellelemente 53 können bevorzugt durch Stellschrauben gebildet sein, welche zumeist in senkrechter Richtung auf den Spalt 37 ausgerichtet sind und diesen überbrücken.

Ist beispielsweise nur eines der Stellelemente 53 angeordnet, so kann nur in einer Richtung - gemäß eingetragenem Doppelpfeil 41 - eine Verlagerung der Formflächen 26 durchgeführt werden. Zur Anschlagbegrenzung des Verstellweges kann dann beispielsweise in den dem Stellelement 53 gegenüberliegenden und in den sich während der Verlagerung verkleinernden Spalt 37, wenn dieser eine exakte, vorbestimmbare Spaltbreite 39 aufweist, ein Distanzelement als Verlagerungsbegrenzung eingesetzt sein, wobei mittels des Stellelementes der Spalt 37 soweit verringert wird, bis die den Spalt 37 begrenzenden Spaltwände an dem Distanzelement zur Anlage kommen und somit eine exakte Maßverlagerung der Formflächen 26 durchgeführt worden ist. Dieses Distanzelement ist hier nicht näher dargestellt worden, kann jedoch z.B. durch streifenförmige Elemente mit einer exakten Stärke, Einstell-Lehren usw. gebildet sein, welche nach der Fixierung entnommen werden können. Es ist aber auch möglich, diese Distanzelemente im Spalt 37, 38 als Anschlagbegrenzung zu belassen, wenn diese entsprechend ausgebildet sind und nicht die Gefahr eines unbeabsichtigten Lösens besteht. Die Fixierung bzw. bedarfsweise lösbare Halterung relativ gegenüber den feststehenden Teilen der Kalibrierblende 17 kann beispielsweise wiederum durch eine der zuvor beschriebenen Feststellvorrichtungen erfolgen.

Unabhängig davon wäre es aber auch möglich, als Stellelement 53 in Kombination mit dem zuvor beschriebenen Distanzelement einen in den Spalt einsetzbaren Keil zu verwenden, mit welchem die Verlagerung der Formflächen 26 mit den diesen zugeordneten Teilbereichen der Kalibrierblende 17 zu bewirken. Es ist aber auch möglich, Stellelemente mit einer mit den gegenüberliegenden Spaltflächen zusammenwirkenden Keilverzahnung zu verwenden und durch die Wahl des Keilwinkels eine gegenseitige Verstellung der zu verlagernden Formflächen zu erzielen. Die Fixierung in der verlagerten Position kann, wie zuvor beschrieben, verschiedenst erfolgen.

Eine gute Justierbarkeit erreicht man hingegen, wenn einander gegenüberliegenden und zu verlagernden Formflächen 26 jeweils ein Stellelement 53 zugeordnet ist und so je nach Einsetztiefe bzw. Verstellweg des Stellelements die gewünschte Verlagerung der Formflächen 26, gemäß dem Doppelpfeil 41, eingestellt werden kann. Weist das Stellelement 53 auf dem mit der Spaltfläche zusammenwirkenden Ende eine nahezu parallel zur Spaltfläche ausgerichtete Ebene auf, so ist eine ebenflächige Druckausübung möglich.

Bildet man jedoch an der der Formfläche 26 näher liegenden Spaltfläche eine Vertiefung 55 aus, welche derart angeordnet ist, dass das Verstellelement 53 in diese einsetzbar ist, erreicht man, wenn das darin einsetzbare Verstellelement 53 in seinem Endbereich eine dazu nahezu gegengleiche Raumform aufweist, dass der verlagerbare Abschnitt der Kalibrierblende 17 auch in Extrusionsrichtung 6 abgestützt ist. Dadurch kann auch zusätzlich zur Verlagerungsbewegung eine in senkrechter Richtung zu den Eintritts- bzw. Austrittsflächen 28, 29 einwirkende Kraft mit den Verstellelementen 53 abgestützt werden.

Zusätzlich ist es aber auch noch möglich, wie dies in der Fig. 5 in größerem Maßstab dargestellt ist, dass im Bereich der in Extrusionsrichtung 6 zweiten Austrittsfläche 29, also an der den Austrittsbereich 35 bildenden Austrittsfläche 29, zumindest ein den Spalt 37 in Richtung zur Formfläche 26 überragendes Abstützelement 56 angeordnet ist. Dieses Abstützelement 56 ist an den in bezug zu den verlagernden Abschnitten der Kalibrierblende 17 feststehenden Abschnitten derselben feststehend zu haltern, wie dies beispielsweise mittels einer Schweißverbindung, Schraubverbindung, Nietverbindung und vielem anderen mehr möglich ist. Wesentlich dabei ist jedoch, dass der zu verlagernde Abschnitt der Kalibrierblende 17 die auf ihn während dem hindurchführen des Gegenstandes 5 einwirkenden Kräfte in Extrusionsrichtung 6 - gemäß Pfeil F - auf das Abstützelement 56 übertragen kann. Die Anzahl der Abstützelement 56, deren Anordnung sowie Ausbildung hängt von den einwirkenden Kräften, der Form der Kalibrieröffnung 24 sowie gegebenenfalls dem durch den Innenraum der Unterdrucktanks 14 bis 16 hindurchgeführten Kühlmittelstrom ab.

Gleichfalls ist es aber auch möglich, das Abstützelement 56 in der Austrittsfläche 29 vertieft anzuordnen, wodurch beispielsweise im Bereich der Austrittsfläche 29 eine Ebenflächigkeit erreichbar ist. Dies ist vereinfacht in strich-punktierten Linien angedeutet.

Die Kalibrierblende 17 ist zumindest im Bereich der zu verlagernden Formflächen 26 aus einem einteiligen Bauteil, insbesondere einer Platte, gebildet, um so die gemeinsame Verlagerung von Teilabschnitten der Kalibrieröffnung 24 mit den Formflächen 26 relativ zu den ortsfesten Formflächen 25 bzw. ortsfesten Abschnitten der Kalibrierblende 17 durchführen zu können.

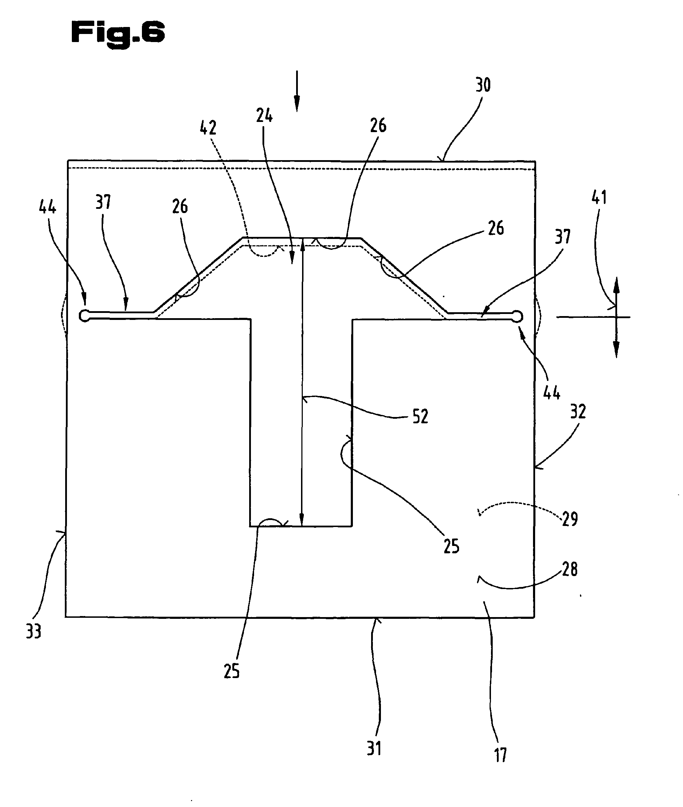

In der Fig. 6 ist eine weitere und gegebenenfalls für sich eigenständige Ausbildung der Kalibrierblende 17 mit einer darin beispielhaft wiedergegebenen Kalibrieröffnung 24 gezeigt, wobei wiederum für gleiche Teile gleiche Bezugszeichen, wie in der vorangegangen Fig. 1 bis 5, verwendet werden.

Diese Kalibrierblende 17 ist bei diesem Ausführungsbeispiel zumindest im Bereich der zu verlagernden Formflächen 26 aus einem einteiligen Bauteil gebildet und in Extrusionsrichtung gesehen durch die Eintritts- bzw. Austrittsflächen 28, 29 sowie zwischen diesen erstreckende Seitenflächen 30 bis 33 in ihrer Raumform festgelegt. Die hier dargestellte Kalibrieröffnung 24 ist durch die ortsfesten Formflächen 25 sowie die dazu verlagerbaren Formflächen 26 umgrenzt. Zur Veränderung des Abstandes 52 zwischen der ortsfesten Formfläche 25 und der zu verlagernden Formfläche 26 ist beim vorliegenden vorgesehen, dass ausgehend von zumindest zwei Formflächen 26, jeweils zumindest ein Spalt 37 in Richtung zu einer der Seitenflächen 30 bis 33 angeordnet ist.

Beim hier gezeigten Ausführungsbeispiel verläuft der Spalt 37 von den T-förmigen Enden der Kalibrieröffnung 24 in Richtung zu den jeweils gegenüberliegenden Seitenflächen 32, 33. Der Startpunkt 44 des Spaltes 37 ist benachbart zu den Seitenflächen 32, 33 angeordnet und endet in die Kalibrieröffnung 24, wodurch unter Aufbringung einer Verstellkraft, gemäß schematisch eingetragenem Pfeil, eine Deformation des Werkstoffes der Kalibrierblende 17 im Randbereich der selben erfolgt und so die Lage und damit verbunden der Abstand 52 zwischen der verlagerbaren Formfläche 26 in bezug zur ortsfesten Formfläche 25 veränderbar ist, wobei die Umgrenzung der Kalibrieröffnung 24 durch die in strichlierten Linien eingezeichneten verlagerten Formflächen 42 sowie den ortsfesten Formflächen 25 begrenzt ist. Zur Verringerung und/oder Vergrößerung des Abstandes 52 kann die Anordnung sowie Anzahl der Spalte 37 je nach Querschnittsform der Kalibrieröffnung 24 gewählt werden.

Bei der hier gezeigten Verringerung sowie gegebenenfalls Vergrößerung des Abstandes 52 (siehe Fig. 2) - gemäß eingetragenem Doppelpfeil 41 - zwischen den Formflächen 25, 26 sind die Spalte 37 in bezug zur Kalibrieröffnung 24 gegenüberliegend sowie in der gleichen Ebene angeordnet. Bei einer anderen Querschnittsform der Kalibrieröffnung 24 können die Spalte 37 in bezug zur Kalibrieröffnung 24 zwar gegenüberliegen, jedoch beispielsweise zueinander versetzt angeordnet sein.

Die bedarfsweise lösbare Feststellvorrichtung zwischen dem zu verlagernden Abschnitt der Kalibrierblende 17 und dem feststehenden Abschnitt kann gemäß den zuvor beschriebenen Ausführungen gewählt werden. Falls die Festigkeit des Werkstoffes zwischen dem Startpunkt 44 und den diesen zugeordneten Seitenflächen 30 bis 33 ausreichend ist, kann auf die bedarfsweise lösbare Feststellvorrichtung verzichtet werden.

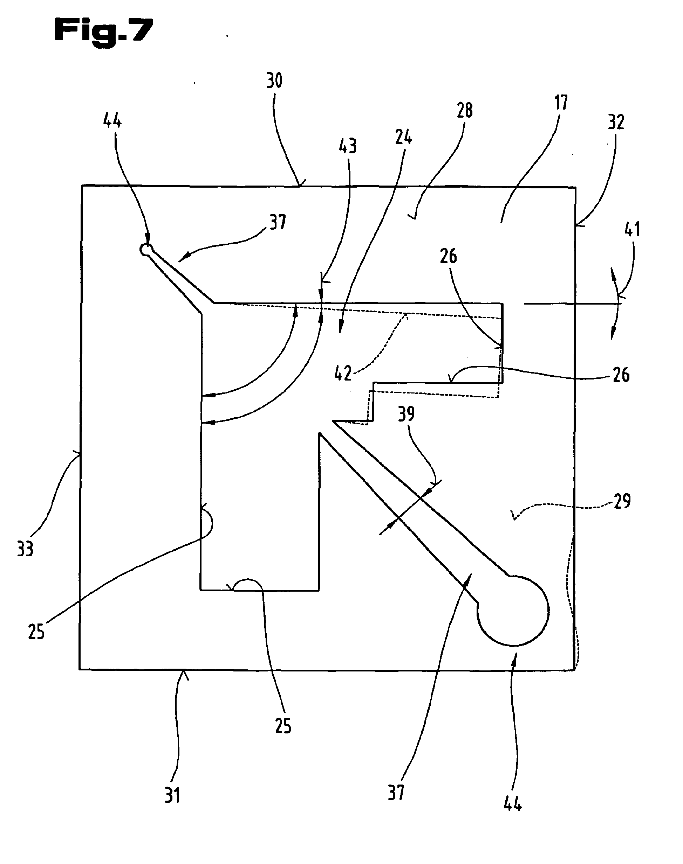

In der Fig. 7 ist eine weitere und gegebenenfalls für sich eigenständige Ausbildung der Kalibrierblende 17 gezeigt, in welcher wiederum eine Kalibrieröffnung 24 mit Formflächen 25, 26 angeordnet ist. Gleichfalls werden wiederum für gleiche Teile gleiche Bezugszeichen, wie in den vorangegangenen Fig. 1 bis 6, verwendet.

Diese Kalibrierblende 17 weist wiederum die in Extrusionsrichtung hintereinander angeordneten Eintritts- bzw. Austrittsflächen 28 bzw. 29 sowie die sich dazwischen erstreckenden Seitenflächen 30 bis 33 auf. Der Querschnitt der Kalibrieröffnung 24 ist hier in etwa L-förmig gewählt, wobei eine winkelige Verlagerung der Formflächen 26, welche den Seitenflächen 30 bzw. 32 naheliegender sind, gegenüber den weiteren Formflächen 25 ermöglicht werden soll. Dazu ist in etwa in der Diagonale der L-förmigen Kalibrieröffnung 24 beidseits dieser jeweils ein Spalt 37 angeordnet, welcher sich bis hin zu den Startpunkten 44 im Übergangsbereich zwischen den Seitenflächen 30 bzw. 33 sowie 31 bzw. 32 erstreckt. Die Spalten 37 erstrecken sich bis in die Kalibrieröffnung hinein und sind somit mit dieser verbunden.

Die der Seitenflächen 33 naheliegendere Formfläche 25 wird hier als ortsfeste Formfläche 25 betrachtet. Die der Seitenfläche 30 naheliegendere und verlagerbare Formfläche 26 schließt mit dieser vor der Verlagerung, welche gemäß dem eingetragenen Doppelpfeil 41 in beide Richtungen erfolgen kann, hier einen rechten Winkel ein. Die verlagerte Kontur der Kalibrieröffnung 24 im verlagerten Bereich der Kalibrierblende 17 ist durch die strichlierte Darstellung der Formflächen 42 vereinfacht und stark übertrieben gezeigt. Die verlagerte Formfläche 42 schließt mit der ortsfesten Formfläche 25 einen geringeren Winkel als den rechten Winkel ein, wodurch sich durch die Differenz vom Ausgangswinkel der Verlagerungswinkel 43 berechnen lässt.

Je nach gewünschter Verlagerung der Formflächen 26 wäre eine Verlagerung in die andere Richtung möglich, wobei dann die verlagerte Formfläche 42, in bezug zur ortsfesten Formfläche 25, einen größeren Winkel einschließt als vor der Verlagerung.

Je nach Ausmaß der Verlagerung kann es vorteilhaft sein, wenn bei einer Verringerung des Bezugswinkels der Spalt 37, ausgehend vom hier links oben dargestellten Bereich in Richtung des diagonal gegenüberliegenden, hier rechts unten dargestellten Bereich, eine stetig zunehmende Spaltbreite 39 aufweist. Unabhängig davon ist es aber auch möglich, zumindest einen der beiden Spalte 37 vor der Verlagerung mit einer exakt vorbestimmbaren Spaltbreite 39 auszubilden und wiederum für die Verlagerung ein entsprechendes Distanzelement, in den sich verkleinernden Spalt 37 einzusetzen, wodurch der Verlagerungswinkel 43 exakt vorbestimmbar ist. Eine bedarfsweise lösbare Feststellvorrichtung kann wiederum vorgesehen sein. Gleiches gilt auch für die in dieser Fig. nicht dargestellte Anordnung zumindest eines, bevorzugt mehrerer Abstützelemente 56 sowie Einsatzteile 51.

Bei dieser hier gewählten Ausführungsform dient der Umgebungsbereich des hier links oben dargestellten Startpunktes 44 zwischen diesem und den diesen unmittelbar benachbarten Seitenflächen 30 bzw. 33 als Basis des Schwenkbereiches. Im Bereich des weiteren gegenüberliegenden Startpunktes 44 ist eine möglich auftretende Verformung übertrieben in strichlierten Linien dargestellt, wobei bei einer plastischen Verformung dieses Bereiches gegebenenfalls auf die Anordnung der Feststellvorrichtung verzichtet werden kann. Aus Stabilitäts- bzw. Festigkeitsgründen sowie gegebenenfalls der Verringerung bzw. Verhinderung von Schwingungen kann es aber vorteilhaft sein, diese doch vorzusehen.

Wie bereits zuvor kurz angedeutet, umfasst die Formgebungseinrichtung 3 für die Extrusionsanlage 1 mehrere Kalibrierwerkzeuge 9 bis 13, wobei auch diese aus einzelnen hintereinander angeordneten Kalibrierblenden 17 gebildet sein können, wie dies in der Fig. 1 beim Kalibrierwerkzeug 13 vereinfacht angedeutet worden ist. Die Anordnung der Spalte 37, 38 ist somit nicht nur auf die in den Unterdrucktanks 14 bis 16 beschriebenen Kalibrierblenden 17 beschränkt, sondern können diese Spalte 37, 38 auch in gleicher Art und Weise bei den einzelnen Kalibrierwerkzeugen 9 bis 13 zur Korrektur der Profilgeometrie Anwendung finden.

Dabei ist aber die zuvor beschriebene scheibenweise Zusammensetzung der einzelnen Kalibrierwerkzeuge aus den Kalibrierblenden 17 ebenfalls nicht zwingend, wobei über die gesamte Länge des Kalibrierblockes auch im Bereich der Trockenkalibrierung die Anordnung der Spalte 37, 38 möglich ist, da die Verstellbewegung und die damit verbundene Verstellung lediglich von der aufzubringenden Verstellkraft abhängig ist.

Bei in Extrusionsrichtung länger ausgebildeten Kalibrierwerkzeugen, beispielsweise in einer Größenordnung zwischen 150 mm und 500 mm können dann über die Längserstreckung des Spaltes durch das Kalibrierwerkzeug 9 bis 13 hindurch mehrere unterschiedliche Stellelemente 56 zur Aufbringung der notwendigen Verstellkraft vorgesehen sein, um auch hier die notwendige Verstellkraft mit dem damit verbundenen Verstellweg in Folge der gewünschten Profilkorrektur aufbringen zu können.

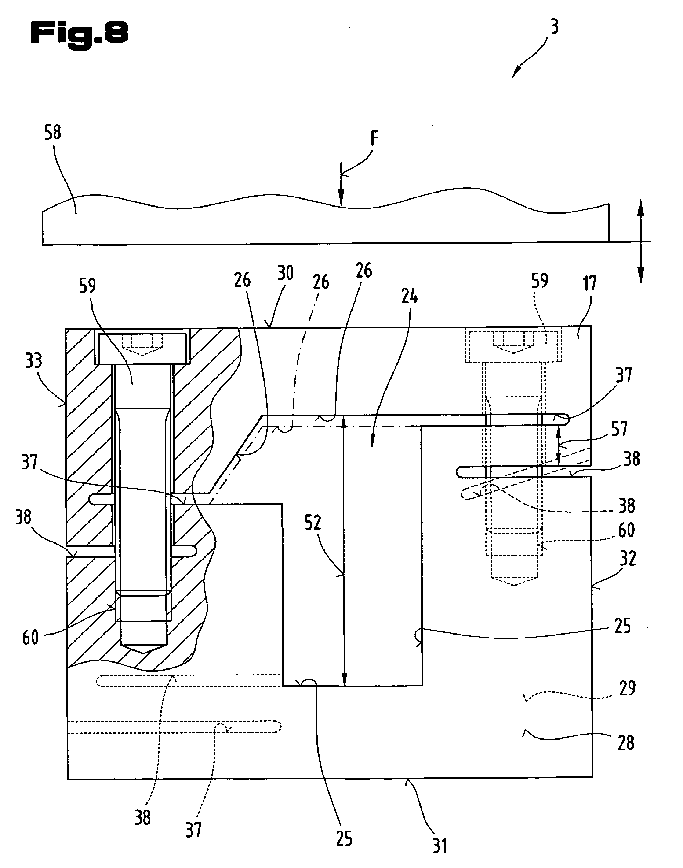

In der Fig. 8 ist eine weitere mögliche und gegebenenfalls für sich eigenständige Ausbildung der Kalibrierblende 17 zur Bildung einer Formgebungseinrichtung 3 dargestellt, wobei wiederum für gleiche Teile gleiche Bauteilbezeichnungen bzw. Bezugszeichen wie in den vorangegangenen Fig. 1 bis 7 verwendet werden. Gleichfalls wird, um unnötige Wiederholungen zu vermeiden, auf die detaillierte Beschreibung in den vorangegangenen Fig. 1 bis 7 hingewiesen bzw. Bezug genommen.

Die hier dargestellte Kalibrierblende 17 weist wiederum eine dem hindurchführbaren und hier nicht näher dargestellten Gegenstand 5 zugewandte Eintrittsfläche 28 und die davon distanzierte Austrittsfläche 29 sowie die sich zwischen diesen erstreckenden Seitenflächen 30 bis 33 auf. Durch diese einzelnen vorgenannten Flächen ist die Kalibrierblende 17 in ihrer Raumform festgelegt.

Die Kalibrieröffnung 24 mit ihren Formflächen 25, 26 erstreckt sich durch die Kalibrierblende 17 zwischen der Eintrittsfläche 28 und Austrittsfläche 29 hindurch und dient - wie bereits zuvor beschrieben - zum Anlegen zumindest einzelner äußerer Oberflächen des Gegenstandes 5 an den Formflächen 25, 26, wodurch die Form des hindurchführbaren Gegenstandes 5 festgelegt wird.

Gleichfalls sind bei diesem Ausführungsbeispiel wiederum die als ortsfest angesehenen Formflächen mit dem Bezugszeichen 25 und die dazu relativ verlagerbaren Formflächen mit dem Bezugszeichen 26 bezeichnet.

Ebenfalls sei erwähnt, dass die hier dargestellte Kalibrieröffnung 24 nur beispielhaft für eine Vielzahl von möglichen Querschnittsformen gewählt worden ist und selbstverständlich je nach zu kalibrierendem Gegenstand 5 diese an die entsprechenden Umrissformen anzupassen ist. Die hier gezeigte Kalibrieröffnung 24 ist in etwa L-förmig ausgebildet. Ausgehend von den zu verlagernden Formflächen 26 - hier z.B. die den Seitenflächen 30 und 33 zugewandten und den kürzeren Schenkel des L-förmigen Querschnitt bildenden Formflächen 26 - erstreckt sich jeweils ein Spalt 37 von diesen einerseits hin in Richtung der hier rechts dargestellten Seitenfläche 32 und der links dargestellten weiteren Seitenfläche 33. Weiters ist ausgehend von diesen beiden Seitenflächen 32, 33 dem Spalt 37 unmittelbar benachbart jeweils ein weiterer Spalt 38, hin in Richtung auf die Kalibrieröffnung 24 erstreckend angeordnet. Dabei sind die beiden jeweils einander zugeordneten und für die Verstellung zusammenwirkenden Spalte 37, 38 in etwa parallel zueinander verlaufend ausgerichtet und in einer Distanz 57 voneinander beabstandet angeordnet. Die einzelnen Spalte 37, 38 sind dabei in etwa rechtwinkelig zu der Eintrittsfläche 28 bzw. Austrittsfläche 29 verlaufend und zwischen diesen sich erstreckend ausgerichtet. Unabhängig davon ist es aber auch möglich, die sich zwischen der Eintrittsfläche 28 und Austrittsfläche 29 erstreckenden Spalte 37, 38 zwar rechtwinkelig zur Eintrittsfläche 28 bzw. Austrittsfläche 29 anzuordnen, jedoch zueinander unter einem Winkel geneigt in der Kalibrierblende 17 anzuordnen, wie dies im rechten Teil der Kalibrierblende 17 in strichlierten Linie angedeutet ist.

Diese hier beidseits der Kalibrieröffnung 24 angeordneten und zusammenwirkenden Spalte 37, 38 dienen dazu - wie dies bereits auch in der Fig. 6 beschrieben worden ist - den Abstand 52 zwischen der hier unten dargestellten und der Seitenfläche 31 zugewandten Formfläche 25 sowie der der hier oben dargestellten Seitenfläche 30 zugewandten Formfläche 26 zu verändern, wie dies im Bereich der zu verlagernden Formflächen 26 in strichpunktierten Linien vereinfacht dargestellt worden ist. Dabei kann die Verformung des Werkstoffes der Kalibrierblende 17 zwischen den einander zugeordneten Spalte 37, 38 entweder im elastischen und/ oder plastischen Bereich liegen. So kann beispielsweise die vorbestimmte Verlagerung der Formflächen 26 zur Änderung des Abstandes 52 durch eine hier schematisch vereinfacht dargestellte Presse 58 mit der eingetragenen Kraft gemäß Pfeil F erfolgen, wodurch die zu verlagernden Formflächen 26 beispielsweise in die in strichpunktierten Linien eingezeichnete Lage verbracht werden. Je nach Ausmaß des Verformungsweges und der Anordnung der Spalte 37, 38 zueinander kann eine bleibende plastische bzw. auch aber eine elastische Verformung erzielt werden.

Wird eine Verformung des Materials der Kalibrierblende 17 im Bereich der jeweils einander zugeordneten Spalte 37, 38 gewünscht, so kann die Verlagerung der Formflächen 26 in bezug zu den feststehenden Formflächen 25 beispielsweise auch durch ein oder mehrere Stellelemente 59 erfolgen, welche den einzelnen zusammenwirkenden Spalte 37, 38 zugeordnet sind. Bei diesem Ausführungsbeispiel sind die Stellelemente 59 beispielsweise durch Schrauben gebildet, welche ausgehend von der den zu verlagernden Formflächen 26 zugeordneten Seitenfläche 30 sich hin in Richtung der gegenüberliegend angeordneten Seitenfläche 31 innerhalb der Kalibrierblende 17 erstrecken. Dabei ist eine Gewindeanordnung 60 auf der vom Spalt 38 - also jenem Spalt, der sich ausgehend von der Seitenfläche 32 bzw. 33 hin in Richtung auf die Kalibrieröffnung 24 erstreckt - auf der der Seitenfläche 31 zugewandten Seite angeordnet. Dadurch ist es möglich, durch Eindrehen der Schraube jenen Teilbereich der Kalibrierblende 17, dem die zu verlagernden Formflächen 26 zugeordnet sind, durch verkleinern der jeweils zusammenwirkenden Spalte 37, 38 bedarfsweise zu verlagern. So kann je nach Verstellweg der einzelnen Verstellelemente 59 - hier im vorliegenden Ausführungsbeispiel zwei Stellelemente 59 - beispielsweise eine parallele Verlagerung bzw. Verschiebung der Formflächen 26 erfolgen. Werden hingegen beispielsweise die einander zugeordneten Spalte 37, 38 jeweils unterschiedlich verformt bzw. verändert, kann beispielsweise auch eine winkelige Verlagerung der zu verlagernden Formflächen 26 erfolgen. Dies wäre aber auch durch die beiden einander zugeordneten und in strichlierten Linien dargestellten Spalte 37, 38 im linken unteren Eck der Kalibrierblende 17 bei entsprechender Anordnung der Stellelemente 59 möglich. Bei einer winkeligen Verlagerung kann es aber bereits ausreichend sein, in dem den Dreh- bzw. Schwenkpunkt bildenden Bereich der Kalibrierblende 17 zur Verlagerung der Formflächen 26 nur einen der Spalte 37, 38 anzuordnen, wobei durch die Anordnung und Ausrichtung des Spaltes 37 und/oder 38 die winkelige Verlagerung und damit der Schwenk- bzw. Drehpunkt für die Verlagerung der Formflächen 26 einfach festlegbar ist.

Die hier zuvor in den Fig. 2 bis 8 beschriebenen Ausführungsformen der Kalibrierblende 17 sind innerhalb der gesamten Formgebungseinrichtung 3 einsetzbar und können zur Bildung der Kalibrierwerkzeuge 10 bis 13 und/oder als Kalibrier- bzw. Stützblende innerhalb der Unterdrucktanks 14 bis 16 Verwendung finden.

Wie bereits zuvor kurz angedeutet, ist es möglich, den zu verlagernden bzw. zu verstellenden Formflächen 26 fernbetätigbare Verstellmittel zuzuordnen, mit denen eine halb- und/oder vollautomatische bedarfsweise Lageveränderung relativ gegenüber den ortsfesten Formflächen 25 durchführbar ist. Dabei kann bei beispielsweise bei einer vordefinierten Spaltbreite 39 der Spalte 37, 38 durch eine Computersimulation die Lage sowie gegebenenfalls die Art des Spaltes ermittelt werden und so in weiterer Folge ein Rückschluss auf die endgültig hergestellte Profilgeometrie gewonnen werden. Sind dabei Abweichungen von der Soll-Geometrie zu der hergestellten bzw. der Ist-Geometrie festgestellt worden, kann durch die zuvor beschriebene halb- und oder vollautomatische Lageveränderung der verlagerbaren Formflächen 26 die Verstellung während des laufenden Extrusionsprozesses durchgeführt werden. Dazu können beispielsweise längenveränderbare Elemente in die Spalten 37, 38 eingesetzt werden, welche über eine Steuer- und/oder Regelvorrichtung entsprechend angesteuert werden, die die Verstellung der Spaltbreite und damit verbunden die Lageveränderung der Formflächen 26 bewirken.

Die Überwachung der Profilkontur kann beispielsweise automatisch im Bereich der Ablängvorrichtung durchgeführt werden, wie dies aus dem allgemeinen Stand der Technik bekannt ist. Dadurch kann die exakte Ist-Profil-Geometrie mit der vorgegebenen Soll-Profil-Geometrie durch entsprechende Computersimulation verglichen werden und bei festgestellten Abweichungen kann sofort über einen Regelkreis und Ansteuerung der Verstellelemente eine Verlagerung der Formflächen 26 über die Variierung der Spaltbreite 39 der Spalte 37, 38 erfolgen.

Aus den Erfahrungswerten des Verzuges von Profilgeometrien ist es bereits im Vorfeld nunmehr möglich, die Anordnung der Spalte 37, 38 in den Kalibrierblenden 17 entsprechend zu wählen, um hier bereits eine Verstellmöglichkeit um ein gewisses Ausmaß durchführen zu können, ohne dass dabei ein hoher Aufwand an sonst üblicher nachträglicher Bearbeitung im Bereich der Kalibrieröffnung 24 durchzuführen ist. Damit kann im laufenden Extrusionsprozeß, ohne langer Stillstandszeiten sowie einem hohen Nachbearbeitungsaufwand, die hergestellte Profilgeometrie rasch an die Soll-Geometrie maßlich herangeführt werden.

Diese hier beschriebene direkte Verstellmöglichkeit während des Extrusionsbetriebes kann aber selbstverständlich auch im Bereich der sogenannten Kalibrierwerkzeuge, insbesondere der Trockenkaliber, Anwendung finden, um hier bereits eine möglichst exakte Annäherung bzw. identische Ausbildung der herzustellenden Profilgeometrie mit der Soll-Profil-Geometrie zu erzielen. Dabei kann beispielsweise mehreren der Kalibrierblenden 17 eine gemeinsame Verstellvorrichtung zur Verlagerung der einzelnen Formflächen 26 zugeordnet sein, um so eine gleichzeitige und vor allem gemeinsame Verstellung bzw. Verlagerung durchführen zu können. Diese Verstellvorrichtung kann beispielsweise in Form einer Exzenterverstellung ausgebildet sein.

Unabhängig davon ist es aber auch möglich, die einzelnen Spalte zum Hindurchführen eines weiteren Kühlmediums zu nutzen, um bei einer beispielsweise unmittelbaren Hintereinanderanordnung der einzelnen Kalibrierblenden 17 im Bereich der Kalibrierwerkzeuge eine rasche Wärmeabfuhr aus dem hindurchführbaren Gegenstand aus den dem Spalt 37, 38 zugeordneten verlagerbaren Formflächen 26 durchführen zu können. Dadurch kann beispielsweise ein Längskanal innerhalb des Kalibrierwerkzeuges geschaffen werden, der lediglich mit entsprechenden Zu- und Ablaufleitungen zu verbinden ist, um das Kühlmedium entsprechend zu- bzw. abführen zu können. Dadurch kann ein Zusatznutzen zusätzlich zu der relativen Winkelverlagerung der Formflächen 26 im Bereich der Kühlung erzielt werden, wobei ein Zutritt des durch die Spalte 37, 38 hindurchgeleiteten Kühlmediums hin zu der äußeren Oberfläche des Gegenstandes durch entsprechende Anordnung gesichert verhindert ist.

Der Ordnung halber sei abschließend darauf hingewiesen, dass zum besseren Verständnis des Aufbaus der Kalibrierblende 17 mit dem darin angeordneten Spalt sowie dessen Verstellung und Halterung diese bzw. deren Bestandteile teilweise unmaßstäblich und/oder vergrößert und/oder verkleinert dargestellt wurden.

### Bezugszeichenaufstellung

- 1: Extrusionsanlage
- 2: Extruder
- 3: Formgebungseinrichtung
- 4: Raupenabzug
- 5: Gegenstand

- 6: Extrusionsrichtung
- 7: Extrusionswerkzeug
- 8: Kalibiervorrichtung
- 9: Kalibrierwerkzeug
- 10: Kalibrierwerkzeug

- 11: Kalibrierwerkzeug
- 12: Kalibrierwerkzeug
- 13: Kalibrierwerkzeug
- 14: Unterdrucktank
- 15: Unterdrucktank

- 16: Unterdrucktank
- 17: Kalibrierblende
- 18: Aufnahmebehälter
- 19: Maschinenbett
- 20: Aufstandsfläche

- 21: Kalibriertisch
- 22: Laufrolle
- 23: Fahrschiene
- 24: Kalibrieröffnung
- 25: Formfläche

- 26: Formfläche
- 27: Profilquerschnitt
- 28: Eintrittsfläche
- 29: Austrittsfläche
- 30: Seitenfläche

- 31: Seitenfläche
- 32: Seitenfläche
- 33: Seitenfläche
- 34: Eintrittsbereich
- 35: Austrittsbereich

- 36: Dicke
- 37: Spalt
- 38: Spalt
- 39: Spaltbreite
- 40: Längsverlauf

- 41: Doppelpfeil
- 42: Formfläche
- 43: Verlagerungswinkel
- 44: Startpunkt
- 45: Teilbereich

- 46: Teilbereich
- 47: Teilbereich
- 48: Verbindungsbereich
- 49: Distanz
- 50: Aufnahmeöffnung

- 51: Einsatzteil
- 52: Abstand
- 53: Stellelement
- 54: Formfläche
- 55: Vertiefung

- 56: Abstützelement
- 57: Distanz
- 58: Presse
- 59: Stellelement
- 60: Gewindeanordnung

## Patentansprüche

1. Kalibrierblende (17), für eine Extrusionsanlage (1), mit bevorzugt parallel zueinander ausgerichteten, voneinander distanzierten Eintritts- und Austrittsflächen (28, 29) und zwischen diesen sich erstreckenden Seitenflächen (30, 31, 32, 33), wobei eine Längsachse für einen durch eine Kalibrieröffnung (24) hindurchführbaren Gegenstand (5) im wesentlichen senkrecht zur Eintritts- bzw. Austrittsfläche (28, 29) ausgerichtet ist und die Kalibrieröffnung (24) Formflächen (25, 26) zum Anlegen des hindurchführbaren Gegenstandes (5) aufweist, wobei einzelne Formflächen (25, 26) einen äußeren Profilquerschnitt (27) des Gegenstandes (5) umgrenzenund zwischen einer Formfläche (25, 26) und einer Seitenfläche (30, 31, 32, 33) ein sich zumindest über einen Teil der Distanz zwischen der Eintritts- und Austrittsfläche (28, 29) erstreckender Spalt (37, 38) angeordnet ist, **dadurch gekennzeichnet, daß** der Spalt (37, 38) zumindest zwischen mehreren einander unmittelbar benachbarten Teilen von mehreren Formflächen (26) der Kalibrieröffnung (24) und zumindest einer der Seitenflächen (30, 31, 32, 33) durchlaufend angeordnet ist und zumindest die dem Spalt (37, 38) zugeordneten Teile der Formflächen (26) zusammenhängend und gemeinsam gegenüber den anderen dazu ortsfesten Formflächen (25) der gleichen Kalibrieröffnung (24) relativ zu diesen in ihrer Lage verstellbar sind.

2. Kalibrierblende (17), für eine Extrusionsanlage (1), mit bevorzugt parallel zueinander ausgerichteten, voneinander distanzierten Eintritts- und Austrittsflächen (28, 29) und zwischen diesen sich erstreckenden Seitenflächen (30, 31, 32, 33), wobei eine Längsachse für einen durch eine Kalibrieröffnung (24) hindurchführbaren Gegenstand (5) im wesentlichen senkrecht zur Eintritts- bzw. Austrittsfläche (28, 29) ausgerichtet ist und die Kalibrieröffnung (24) Formflächen (25, 26) zum Anlegen des hindurchführbaren Gegenstandes (5) aufweist, wobei einzelne Formflächen (25, 26) einen äußeren Profilquerschnitt (27) des Gegenstandes (5) umgrenzen und zwischen einer Formfläche (25, 26) und einer Seitenfläche (30, 31, 32, 33) ein sich zumindest über einen Teil der Distanz zwischen der Eintritts- und Austrittsfläche (28, 29) erstreckender Spalt (37) angeordnet ist, **dadurch gekennzeichnet, daß** ausgehend von zumindest zwei zu verlagernden Formflächen (26) der Kalibrieröffnung (24) jeweils zumindest ein Spalt (37) in Richtung zu einer der Seitenflächen (30, 31, 32 , 33) angeordnet ist und zumindest die dem Spalt (37) zugeordneten Teile der zu verlagernden Formflächen (26) zusammenhängend und gemeinsam gegenüber den anderen dazu ortsfesten Formflächen (25) der gleichen Kalibrieröffnung (24) relativ zu diesen in ihrer Lage verstellbar sind.

3. Kalibrierblende nach Anspruch 1 oder 2, **dadurch gekennzeichnet, dass** diese zumindest im Bereich der verlagerbaren Formfläche (26) aus einem einteiligen Bauteil gebildet ist.

4. Kalibrierblende nach einem der vorhergehenden Ansprüche, **dadurch gekennzeichnet, dass** eine Spaltbreite (39) des Spaltes (37, 38) über dessen Längsverlauf (40) vor der Verlagerung der Formflächen (26) gleich ist.

5. Kalibrierblende nach einem der Ansprüche 1 bis 3, **dadurch gekennzeichnet, dass** die Spaltbreite (39) des Spaltes (37, 38) über dessen Längsverlauf (40) vor der Verlagerung der Formflächen (26) ungleich ist.

6. Kalibrierblende nach Anspruch 4 oder 5, **dadurch gekennzeichnet, dass** die Spaltbreite (39) des Spaltes (37, 38) in paralleler Richtung zu der Eintritts- bzw. Austrittsfläche (28, 29) zwischen 0,1 mm und 15 mm, bevorzugt zwischen 0,25 mm und 0,8 mm, beträgt.

7. Kalibrierblende nach einem der vorhergehenden Ansprüche, **dadurch gekennzeichnet, dass** die verlagerten Formflächen (42) in ihrer verlagerten Position in bezug zur ortsfesten Formfläche (25) positioniert gehaltert sind.

8. Kalibrierblende nach einem der vorhergehenden Ansprüche, **dadurch gekennzeichnet, dass** ein Abstand (52) zwischen zumindest einem Teilabschnitt einer der verlagerten Formflächen (26) in bezug zur ortsfesten Formfläche (25) veränderbar ausgebildet ist.

9. Kalibrierblende nach Anspruch 8, **dadurch gekennzeichnet, dass** der Abstand (52) nach der Verlagerung der Formfläche (26) größer ist als vor der Verlagerung.

10. Kalibrierblende nach Anspruch 8, **dadurch gekennzeichnet, dass** der Abstand (52) nach der Verlagerung der Formfläche (26) kleiner ist als vor der Verlagerung.

11. Kalibrierblende nach einem der vorhergehenden Ansprüche, **dadurch gekennzeichnet, dass** im Bereich der Austrittsfläche (29) zumindest ein den Spalt (37, 38) in Richtung zur Formfläche (26) überragendes Abstützelement (56) angeordnet ist.

12. Kalibrierblende nach Anspruch 11, **dadurch gekennzeichnet, dass** das Abstützelement (56) in der Austrittsfläche (29) vertieft angeordnet ist.

13. Kalibrierblende nach einem der vorhergehenden Ansprüche, **dadurch gekennzeichnet, dass** ausgehend von zumindest einer der Seitenflächen (30, 31, 32, 33) in Richtung auf den Spalt (37, 38) zumindest ein dieses überbrückendes Stellelement (53) angeordnet ist.

14. Kalibrierblende nach Anspruch 13, **dadurch gekennzeichnet, dass** das Stellelement (53) in senkrechter Richtung auf den Spalt (37, 38) ausgerichtet ist.

15. Kalibrierblende nach Anspruch 13 oder 14, **dadurch gekennzeichnet, dass** einander gegenüberliegenden zu verlagernden Formflächen (26) jeweils ein Stellelement (53) zugeordnet ist.

16. Kalibrierblende nach einem der Ansprüche 13 bis 15, **dadurch gekennzeichnet, dass** in einer der Formflächen (25, 26) näherliegenden Spaltfläche eine Vertiefung (55) angeordnet ist, in welche das Stellelement (53) einsetzbar ist.

17. Kalibrierblende nach Anspruch 16, **dadurch gekennzeichnet, dass** die Vertiefung (55) und das darin einsetzbare Verstellelement (53) eine zueinander gegengleiche Raumform aufweisen.

18. Kalibrierblende nach einem der vorhergehenden Ansprüche, **dadurch gekennzeichnet, dass** der Spalt (37, 38) in paralleler Richtung zu der Eintritts- bzw. Austrittsfläche (28, 29) sowie in senkrechter Richtung zu diesem eine vorbestimmbare Spaltbreite (39) aufweist und dass in den während der Verlagerung verkleinerten Spalt (37, 38) ein Distanzelement als Verlagerungsbegrenzung eingesetzt ist.

19. Kalibrierblende nach einem der vorhergehenden Ansprüche, **dadurch gekennzeichnet, dass** die Verlagerung der Formflächen (26) in paralleler Richtung zu der Eintritts- bzw. Austrittsfläche (28, 29) erfolgt.

20. Kalibrierblende nach einem der vorhergehenden Ansprüche, **dadurch gekennzeichnet, dass** Teilabschnitte der verlagerten Formflächen (42) in bezug zur ortsfesten Formfläche (25) nach deren Verlagerung um einen vorbestimmten Verlagerungswinkel (43) verschwenkt sind.

21. Kalibrierblende nach einem der Ansprüche 1, 3 bis 20, **dadurch gekennzeichnet, dass** der Spalt (37, 38) zumindest drei zusammenhängende Teilbereiche (45, 46, 47) aufweist, welche im wesentlichen winkelig zueinander ausgerichtet sind.

22. Kalibrierblende nach Anspruch 21, **dadurch gekennzeichnet, dass** die Teilbereiche (45, 46, 47) des Spaltes (37, 38) in einer parallel zur Eintritts- bzw. Austrittsfläche (28, 29) ausgerichteten Ebene einen in etwa U- bzw. C-förmig ausgerichteten Längsverlauf aufweisen.

23. Kalibrierblende nach Anspruch 21 oder 22, **dadurch gekennzeichnet, dass** zwischen den Teilbereichen (45, 46, 47) des Spaltes (37, 38) als Verbindungsbereich (48) ein Kreisbogen angeordnet ist.

24. Kalibrierblende nach einem der Ansprüche 1, 3 bis 23, **dadurch gekennzeichnet, dass** zwischen einer Formfläche (26) und dem diesen zugeordneten Teilbereich (45, 46, 47) des Spaltes (37, 38) eine Distanz (49) in etwa gleichbleibend ausgebildet ist.

25. Kalibrierblende nach einem der Ansprüche 1, 3 bis 24, **dadurch gekennzeichnet, dass** zwischen einer Formfläche (26) und dem diesen zugeordneten Teilbereich (45, 46, 47) des Spaltes (37, 38) eine Distanz (49) unterschiedlich ausgebildet ist.

26. Kalibrierblende nach einem der Ansprüche 1, 3 bis 25, **dadurch gekennzeichnet, dass** zwischen einer Formfläche (26) und dem diesen zugeordneten Teilbereich (45, 46, 47) des Spaltes (37, 38) eine Distanz (49) stetig zunehmend ausgebildet ist.

27. Kalibrierblende nach einem der Ansprüche 2 bis 20, **dadurch gekennzeichnet, dass** die Spalten (37, 38) in Bezug zur Kalibrieröffnung (24) gegenüberliegend angeordnet sind.

28. Kalibrierblende nach Anspruch 27 **dadurch gekennzeichnet, dass** die Spalten (37, 38) in einer gleichen Ebene angeordnet sind.

29. Kalibrierblende nach einem der Ansprüche 2 bis 20, 27 oder 28, **dadurch gekennzeichnet, dass** ein Startpunkt (44) des Spaltes (37) benachbart zu einer der Seitenflächen (30, 31, 32, 33) angeordnet ist.

30. Kalibrierblende nach einem der Ansprüche 2 bis 20, 27 bis 29, **dadurch gekennzeichnet, dass** zusätzlich zu den ausgehend von der Kalibrieröffnung (24) angeordneten Spalten (37) diesen jeweils unmittelbar benachbart ausgehend von einer der Seitenflächen (30, 31, 32, 33) ein weiterer Spalt (38) zugeordnet ist, der sich hin in Richtung auf die Kalibrieröffnung (24) erstreckt.

31. Kalibrierblende nach einem oder mehreren der vorhergehenden Ansprüche, **dadurch gekennzeichnet, dass** im Umfangsbereich der Kalibrieröffnung (24) sich ausgehend von der Formfläche (25, 26) zumindest eine in dieser vertiefte Aufnahmeöffnung (50) angeordnet ist, in welcher ein verschleißfester Einsatzteil (51) eingesetzt ist und bereichsweise in die Kalibrieröffnung (24) hineinragt.

## Claims

1. Calibration die (17) for an extrusion plant (1), with inlet and outlet surfaces (28, 29) preferably oriented parallel with one another and spaced at a distance apart from one another, and side faces (30, 31, 32, 33) extending between them, and a longitudinal axis for an object (5) to be fed through a calibration orifice (24) is oriented substantially perpendicular to the inlet and outlet surface (28, 29) and the calibration orifice (24) has moulding surfaces (25, 26) which are applied against the object (5) as it is fed through, and individual moulding surfaces (25, 26) have an external profiled cross-section (27) bounding the object (5) and a gap (37, 38) is disposed between a moulding surface (25, 26) and a side face (30, 31, 32, 33) extending at least across part of the distance between the inlet and outlet surface (28, 29), **characterised in that** the gap (37, 38) extends continuously at least between several directly adjacent parts of several moulding surfaces (26) of the calibration orifice (24) and at least one of the side faces (30, 31, 32, 33), and at least the parts of the moulding surfaces (26) co-operating with the gap (37, 38) can be displaced collectively and commonly with respect to the other stationary moulding surfaces (25) of the same calibration orifice (24) in terms of their position relative thereto.

2. Calibration die (17) for an extrusion plant (1) with inlet and outlet surfaces (28, 29) preferably oriented parallel with one another and spaced at a distance apart from one another, and side faces (30, 31, 32, 33) extending between them, and a longitudinal axis for an object (5) to be fed through a calibration orifice (24) is oriented substantially perpendicular to the inlet and outlet surface (28, 29) and the calibration orifice (24) has moulding surfaces (25, 26) which are applied against the object (5) as it is fed through, and individual moulding surfaces (25, 26) have an external profiled cross-section (27) bounding the object (5) and a gap (37) is disposed between a moulding surface (25, 26) and a side face (30, 31, 32, 33) extending at least across part of the distance between the inlet and outlet surface (28, 29), **characterised in that**, at least one gap (37) extends respectively starting from at least two moulding surfaces (26) of the calibration orifice (24) to be displaced, in the direction of one of the side faces (30, 31, 32, 33), and at least the parts of the moulding surfaces (26) co-operating with the gap (37) can be displaced collectively and commonly with respect to the other stationary moulding surfaces (25) of the calibration orifice (24) in terms of their position relative thereto.

3. Calibration die (17) as claimed in claim 1 or 2, **characterised in that** it comprises an integral component in the region of the displaceable moulding surface (26).

4. Calibration die (17) as claimed in one of the preceding claims, **characterised in that** a gap width (39) of the gap (37, 38) is constant across its longitudinal extension (40) prior to displacing the moulding surfaces (26).

5. Calibration die (17) as claimed in one of claims 1 to 3, **characterised in that** the gap width (39) of the gap (37, 38) is not constant across its longitudinal extension (40) prior to displacing the moulding surfaces (26).

6. Calibration die (17) as claimed in claim 4 or 5, **characterised in that** the gap width (39) of the gap (37, 38) is between 0.1 mm and 15 mm, preferably between 0.25 mm and 0.8 mm in the direction parallel with the inlet and outlet surface (28, 29).

7. Calibration die (17) as claimed in one of the preceding claims, **characterised in that** the displaced moulding surfaces (42) are retained in their adjusted position by reference to the stationary moulding surface (25).

8. Calibration die (17) as claimed in one of the preceding claims, **characterised in that** a distance (52) between at least a part-portion of one of the displaced moulding surfaces (26) from the stationary moulding surface (25) can be varied.

9. Calibration die (17) as claimed in claim 8, **characterised in that** the distance (52) after displacing the moulding surface (26) is bigger than prior to the displacement.

10. Calibration die (17) as claimed in claim 8, **characterised in that** the distance (52) after displacing the moulding surface (26) is smaller than prior to the displacement.

11. Calibration die (17) as claimed in one of the preceding claims, **characterised in that** at least one support element (56) in the region of the outlet surface (29), projecting into the gap (37, 38) in the direction of the moulding surface (26).

12. Calibration die (17) as claimed in claim 11, **characterised in that** the support element (56) is recessed into the outlet surface (29).

13. Calibration die (17) as claimed in one of the preceding claims, **characterised in that**, starting from at least one of the side faces (30, 31, 32, 33) in the direction towards the gap (37, 38), at least one adjusting element (53) is disposed bridging the latter.

14. Calibration die (17) as claimed in claim 13, **characterised in that** the adjusting element (53) is oriented in the direction perpendicular to the gap (37, 38).

15. Calibration die (17) as claimed in claim 13 or 14, **characterised in that** an adjusting element (53) is provided respectively for oppositely lying moulding surfaces (26) to be displaced.

16. Calibration die (17) as claimed in one of claims 13 to 15, **characterised in that** a recess (55) is provided in a gap surface lying closer to the moulding surfaces (25, 26), in which the adjusting element (53) can be inserted.

17. Calibration die (17) as claimed in claim 16, **characterised in that** the recess (55) and the adjusting element (53) which can be inserted in it are of a mutually complementary three-dimensional shape.

18. Calibration die (17) as claimed in one of the preceding claims, **characterised in that** the gap (37, 38) has a pre-definable gap width (39) in the direction parallel with the inlet and outlet surface (28, 29) and in the direction perpendicular thereto and a spacer element is inserted in the reduced gap (37, 38) during the displacement to restrict the displacement.

19. Calibration die (17) as claimed in one of the preceding claims, **characterised in that** the moulding surfaces (26) are displaced in the direction parallel with the inlet and outlet surface (28, 29).

20. Calibration die (17) as claimed in one of the preceding claims, **characterised in that** part-portions of the displaced moulding surfaces (42) are pivoted about a predefined displacement angle (43) relative to the stationary moulding surface (25) after their displacement.

21. Calibration die (17) as claimed in one of claims 1, 3 to 20, **characterised in that** the gap (37, 38) has at least three inter-connected part-regions (45, 46, 47) which are essentially oriented at an angle with respect to one another.

22. Calibration die (17) as claimed in claim 21, **characterised in that** the part-regions (45, 46, 47) of the gap (37, 38) have an essentially U-shaped or C-shaped longitudinal extension oriented in a plane disposed parallel with the inlet and outlet surface (28, 29).

23. Calibration die (17) as claimed in claim 21 or 22, **characterised in that** an arc is disposed between the part-regions (45, 46, 47) of the gap (37, 38) constituting a connection region.

24. Calibration die (17) as claimed in one of claims 1, 3 to 23, **characterised in that** a more or less constant distance (49) exists between a moulding surface (26) and the part-region (45, 46, 47) of the gap (37, 38) co-operating with it.

25. Calibration die (17) as claimed in one of claims 1, 3 to 24, **characterised in that** a different distance (49) exists between a moulding surface (26) and the part-region (45, 46, 47) of the gap (37, 38) co-operating with it.

26. Calibration die (17) as claimed in one of claims 1, 3 to 25, **characterised in that** a constantly increasing distance (49) exists between a moulding surface (26) and the part-region (45, 46, 47) of the gap (37, 38) co-operating with it.

27. Calibration die (17) as claimed in one of claims 2 to 20, **characterised in that** the gaps (37, 38) lie opposite one another by reference to the calibration orifice (24).

28. Calibration die (17) as claimed in claim 27, **characterised in that** the gaps (37, 38) are disposed in a same plane.

29. Calibration die (17) as claimed in one of claims 2 to 20, 27, or 28, **characterised in that** a starting point (44) of the gap (37) is disposed adjacent to one of the side faces (30, 31, 32, 33).

30. Calibration die (17) as claimed in one of claims 2 to 20, 27 to 29, **characterised in that**, in addition to the gaps (37) extending out from the calibration orifice (24), another gap (38) is provided immediately adjacent to them extending out from one of the side faces (30, 31, 32, 33), which extends in the direction towards the calibration orifice (24).

31. Calibration die (17) as claimed in one of the preceding claims, **characterised in that** at least one recessed seating orifice (50) is disposed in the peripheral region of the calibration orifice (24) starting from the moulding surface (25, 26), in which a wear-resistant insert part (51) is inserted and extends through certain regions of the calibration orifice (24).

## Revendications

1. Dispositif de calibrage (17), pour une installation d'extrusion (1) avec des faces d'entrée et de sortie (28,29) disposées de préférence parallèlement l'une à l'autre, espacées l'une de l'autre, et des faces latérales (30,31,32,33), s'étendant entre celles-ci, où un axe longitudinal pour un objet (5) pouvant être amené à passer à travers une ouverture de calibrage (24) est orienté sensiblement perpendiculairement à la face d'entrée respectivement de sortie (28,29), et l'ouverture de calibrage (24) présente des faces de formage (25,26) pour l'application de l'objet (5) pouvant passer à travers celle-ci, où les faces de formage individuelles (25,26) délimitent une section transversale externe de profil (27) de l'objet (5), et entre une face de formage (25,26) et une face latérale (30,31,32,33), une fente (37,38) s'étendant au moins sur une partie de la distance entre les faces d'entrée et de sortie (28,29) est disposée, **caractérisé en ce que** la fente (37,38) est disposée au moins entre plusieurs parties directement avoisinantes de plusieurs faces de formage (26) de l'ouverture de calibrage (24) et au moins l'une des faces latérales (30,31,32,33) d'une manière continue, et au moins les parties des faces de formage (26) associées à la fente (37,38) sont déplaçables d'une manière continue et conjointement par rapport aux autres faces de formage (25) en position fixe par rapport à celles-ci de la même ouverture de calibrage (24) relativement à celles-ci dans leur position.

2. Dispositif de calibrage (17) pour une installation d'extrusion (1), avec des faces d'entrée et de sortie (28,29) orientées de préférence parallèlement l'une à l'autre, espacées l'une de l'autre et des faces latérales (30,31,32,33) s'étendant entre celles-ci, où un axe longitudinal pour un objet (5) pouvant traverser une ouverture de calibrage (24) est orienté sensiblement perpendiculairement à la face d'entrée respectivement de sortie (28,29), et l'ouverture de calibrage (24) présente des faces de formage (25,26) pour l'application de l'objet (5) pouvant traverser celle-ci, où des faces de formage individuelles (25,26) entourent une section transversale externe de profil (27) de l'objet (5), et entre une face de formage (25,26) et une face latérale (30,31,32,33), une fente (37) s'étendant au moins sur une partie de la distance entre les faces d'entrée et de sortie (28,29) est disposée, **caractérisé en ce que**, en partant d'au moins deux faces de formage (26) à déplacer de l'ouverture de calibrage (24), à chaque fois au moins une fente (37) est disposée en direction d'une des faces latérales (30,31,32,33), et les parties des faces de formage à déplacer (26) associées à la fente (37) sont déplaçables d'une manière continue et conjointement par rapport aux autres faces de formage (25) en position fixe par rapport à celles-ci de la même ouverture de calibrage (24) relativement à celles-ci dans leur position.

3. Dispositif de calibrage (17) selon la revendication 1 ou 2, **caractérisé en ce que** celui-ci est formé au moins dans la zone de la face de formage déplaçable (26) par un composant en une pièce.

4. Dispositif de calibrage (17) selon l'une des revendications précédentes, **caractérisé en ce qu'**une largeur de fente (39) de la fente (37,38), sur son extension en longueur (40), avant le déplacement des faces de formage (26), est égale.

5. Dispositif de calibrage (17) selon l'une des revendications 1 à 3, **caractérisé en ce que** la largeur (39) de la fente (37,38) sur son extension longitudinale (40), avant le déplacement des faces de formage (26), est inégale.

6. Dispositif de calibrage (17) selon la revendication 4 ou 5, **caractérisé en ce que** la largeur (39) de la fente (37,38) dans la direction parallèle à la face d'entrée respectivement de sortie (28,29) représente entre 0,1 mm et 15 mm, de préférence entre 0,25 mm et 0,8 mm.

7. Dispositif de calibrage (17) selon l'une des revendications précédentes, **caractérisé en ce que** les faces de formage à déplacer (42), dans leur position déplacée, sont retenues en position par rapport à la face de formage en position fixe (25).

8. Dispositif de calibrage (17) selon l'une des revendications précédentes, **caractérisé en ce qu'**un écart (52) entre au moins une section partielle d'une des faces de formage déplacées (26) est modifiable par rapport à la face de formage fixe (25).

9. Dispositif de calibrage (17) selon la revendication 8, **caractérisé en ce que** l'écart (52), après le déplacement de la face de formage (26), est plus grand qu'avant le déplacement.

10. Dispositif de calibrage (17) selon la revendication 8, **caractérisé en ce que** l'écart (52) après le déplacement de la face de formage (26), est plus petit qu'avant le déplacement.

11. Dispositif de calibrage (17) selon l'une des revendications précédentes, **caractérisé en ce que** dans la zone de la face de sortie (29), au moins un élément d'appui (56) faisant saillie sur la fente (37,38) en direction de la face de formage (26) est disposé.

12. Dispositif de calibrage (17) selon la revendication 11, **caractérisé en ce que** l'élément d'appui (56) est disposé en profondeur dans la face de sortie (29).

13. Dispositif de calibrage (17) selon l'une des revendications précédentes, **caractérisé en ce que**, en partant d'au moins l'une des faces latérales (30,31,32,33) en direction de la fente (37,38), au moins un élément de positionnement (53) franchissant celle-ci est disposée.

14. Dispositif de calibrage (17) selon la revendication 13, **caractérisé en ce que** l'élément de positionnement (53) est orienté en position verticale vers la fente (37,38).

15. Dispositif de calibrage (17) selon la revendication 13 ou 14, **caractérisé en ce que** respectivement un élément de positionnement (53) est associé à des faces de formage opposées à déplacer (26).

16. Dispositif de calibrage (17) selon l'une des revendications 13 à 15, **caractérisé en ce qu'**un creux (55), dans lequel l'élément de positionnement (53) peut être placé, est disposé dans une face de fente plus proche des faces de formage (25,26).

17. Dispositif de calibrage (17) selon la revendication 16, **caractérisé en ce que** le creux (55) et l'élément de déplacement (53) pouvant être placé dans celui-ci ont une forme spatiale diamétralement opposée.

18. Dispositif de calibrage (17) selon l'une des revendications précédentes, **caractérisé en ce que** la fente (37,38), dans la direction parallèle à la face d'entrée respectivement de sortie (28,29) et dans la direction verticale à celle-ci, présente une largeur de fente prédéfinissable (39), et **en ce que** dans la fente (37,38) diminuée pendant le déplacement, un élément d'écartement est placé comme délimitation de déplacement.

19. Dispositif de calibrage (17) selon l'une des revendications précécentes, **caractérisé en ce que** le déplacement des faces de formage (26) a lieu dans la direction parallèle à la face d'entrée respectivement de sortie (28,29).

20. Dispositif de calibrage (17) selon l'une des revendications précécentes, **caractérisé en ce que** des sections partielles des faces de formage déplacées (42) par rapport à la face de formage fixe (25), après le déplacement de celles-ci, ont été pivotées selon un angle de déplacement prédéfini (43).

21. Dispositif de calibrage (17) selon l'une des revendications 1, 3 à 20, **caractérisé en ce que** la fente (37,38) présente au moins trois zones partielles continues (45,46,47) qui sont orientées sensiblement angulairement les unes aux autres.

22. Dispositif de calibrage (17) selon la revendication 21, **caractérisé en ce que** les zones partielles (45,46,47) de la fente (37,38), dans un plan orienté parallèlement à la face d'entrée respectivement de sortie (28,29), présentent une extension longitudinale orientée approximativement selon une forme en U respectivement en C.

23. Dispositif de calibrage (17) selon la revendication 21 ou 22, **caractérisé en ce qu'**un arc de cercle est disposé entre les zones partielles (45,46,47) de la fente (37,38) comme zone de liaison (48).

24. Dispositif de calibrage (17) selon l'une des revendications 1, 3 à 23, **caractérisé en ce que**, entre une face de formage (26) et la zone partielle (45,46,47) de la fente (37,38) associée à celle-ci, une distance (49) est réalisée pour rester sensiblement constante.

25. Dispositif de calibrage (17) selon l'une des revendications 1, 3 à 24, **caractérisé en ce que**, entre une face de formage (26) et la zone partielle (45,46,47) de la fente (37,38) associée à celle-ci, une distance (49) est réalisée différemment.

26. Dispositif de calibrage (17) selon l'une des revendications 1, 3 à 25, **caractérisé en ce que**, entre une face de formage (26) et la zone partielle (45,46,47) de la fente (37,38) associée à celle-ci, une distance (49) est réalisée pour augmenter continuellement.

27. Dispositif de calibrage (17) selon l'une des revendications 2 à 20, **caractérisé en ce que** les fentes (37,38), par rapport à l'ouverture de calibrage (24), sont disposées pour se faire face.

28. Dispositif de calibrage (17) selon la revendication 27, **caractérisé en ce que** les fentes (37,38) sont disposées dans un même plan.

29. Dispositif de calibrage (17) selon l'une des revendications 2 à 20, 27 ou 28, **caractérisé en ce qu'**un point de départ (44) de la fente (37) est disposé au voisinage d'une des faces latérales (30,31,32,33).

30. Dispositif de calibrage (17) selon l'une des revendications 2 à 20, 27 à 29, **caractérisé en ce que**, en plus des fentes (37) ménagées en partant de l'ouverture de calibrage (24) est associée à celles-ci, en partant directement d'une des faces latérales (30,31,32,33), une autre fente (38) qui s'étend en direction de l'ouverture de calibrage (24).

31. Dispositif de calibrage (17) selon l'une ou plusieurs des revendications précédentes, **caractérisé en ce que** dans la zone périphérique de l'ouverture de calibrage (24), en partant de la face de formage (25,26), au moins une ouverture de réception (50) creusée dans celle-ci est disposée dans laquelle une pièce d'insertion (51) résistant à l'usure est placée et fait saillie par zones dans l'ouverture de calibrage (24).
